(19) **Europäisches Patentamt / European Patent Office / Office européen des brevets**

(11) **EP 4 071 988 B1**

(12) **EUROPEAN PATENT SPECIFICATION**

(45) Date of publication and mention
of the grant of the patent:
**15.04.2026 Bulletin 2026/16**

(21) Application number: **20895960.1**

(22) Date of filing: **07.12.2020**

(51) International Patent Classification (IPC):
**H02M 1/42** *(2007.01)*    **H02M 7/219** *(2006.01)*

(52) Cooperative Patent Classification (CPC):
**H02M 7/219; H02M 1/008; H02M 1/0085;
H02M 1/4216; H02M 1/4233**

(86) International application number:
**PCT/CN2020/134312**

(87) International publication number:
**WO 2021/110172 (10.06.2021 Gazette 2021/23)**

(54) **METHOD FOR BALANCING REGULATION OF BUS VOLTAGE FOR POWER CONVERTER, AND POWER CONVERTER**

VERFAHREN ZUR SYMMETRIEREGELUNG DER BUSSPANNUNG FÜR LEISTUNGSWANDLER, UND LEISTUNGSWANDLER

PROCÉDÉ D'ÉQUILIBRAGE DE RÉGULATION DE TENSION DE BUS POUR CONVERTISSEUR DE PUISSANCE, CONVERTISSEUR DE PUISSANCE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.12.2019 CN 201911245063**

(43) Date of publication of application:
**12.10.2022 Bulletin 2022/41**

(73) Proprietor: **ZTE Corporation**
**Shenzhen, Guangdong 518057 (CN)**

(72) Inventors:
• **FAN, Shanshan**
  **Shenzhen, Guangdong 518057 (CN)**
• **LIN, Guoxian**
  **Shenzhen, Guangdong 518057 (CN)**
• **DONG, Xiufeng**
  **Shenzhen, Guangdong 518057 (CN)**

(74) Representative: **Swindell & Pearson Limited**
**48 Friar Gate**
**Derby DE1 1GY (GB)**

(56) References cited:
**CN-A- 101 950 960     CN-A- 103 078 337
CN-A- 103 516 219     CN-A- 108 306 484
CN-A- 109 713 917     CN-A- 109 713 917
CN-A- 109 980 913     CN-A- 109 980 913
CN-U- 201 830 155     US-A1- 2005 127 853
US-A1- 2015 349 654   US-B1- 10 153 710**

## Description

## TECHNICAL FIELD

The present disclosure relates to the technical field of switching mode power supply conversion, in particular to a bus voltage balance regulation method for a power converter, a power converter, a storage medium and an electronic device.

## BACKGROUND

Driven by demands and technologies, three-phase rectifier products show a development trend featuring high power density, high efficiency and low costs. With the continuous expansion of energy product categories, three-phase AC to DC power supply products start to be applied to charging pile modules and data center HVDC modules, providing a much higher power level. The topology of three-phase power factor correction (PFC) can be roughly divided into three categories: passive rectification, hybrid rectification and active PFC. A circuit with diode-based uncontrolled rectification in the early stage is called a passive rectification system. The most typical application of a hybrid rectification system is 3rd harmonic current injection into an input side of an uncontrolled bridge rectifier to reduce total harmonic distortion (THD). However, both passive rectification and hybrid rectification have the defects that the harmonic content of an input current is high and that an output voltage is subject to an input voltage. Currently, the active PFC circuit is more popular.

Active PFC can be divided into three-phase rectifiers and single-phase modular combined three-phase rectifiers. Three-phase rectifiers mainly include six-switch boost rectifiers, Vienna rectifiers, six-switch buck rectifiers and Swiss rectifiers. The former two are boost-type rectifiers and the latter two are buck-type rectifiers. A boost-type circuit is the most commonly used three-phase rectifier topology which can use a higher bus voltage, so efficiency is higher. The Vienna rectifier is of a 3-level structure, which reduces the device stress and magnet volume. The Vienna rectifier has higher efficiency and power density compared with the six-switch boost rectifier, and is a widely used topology in the industry at present. A three-phase converter composed of modular single-phase circuits can realize the stress unification of all switching elements. Each phase is of an H-bridge structure, and the three-phase converter is formed by star or delta connection. The efficiency of the whole converter depends on the efficiency level of each power conversion unit. When the stress level of all device switches is reduced, its performance is sure to be better than that of existing three-phase rectifiers. The single-phase modular combined conversion technology can improve the conversion efficiency of the three-phase rectifier to 98%. The application of wide-bandgap devices and SMD power devices can increase switching frequency, reduce the sizes of power devices and magnetic components, and increase the power density of the whole machine, thus reducing the cost of the whole machine.

Whether it is in a traditional rectifier such as the Vienna rectifier with two buses or in a single-phase modular combined three-phase rectifier with three buses, the problem of imbalance of bus voltages exists. An imbalance of bus voltages may be caused by the difference of hardware parameters between phases, asymmetric loads or three-phase input voltage imbalance. Voltage imbalance of buses will lead to an excessively large output ripple of the whole machine and deterioration of various input indexes, and even make the higher bus voltage exceed the withstand voltage range of DC capacitors and other switching elements, thus damaging the devices.

Therefore, it is important to adopt some control strategies to realize bus voltage balance. Existing voltage balancing strategies include a hardware strategy and a software strategy. In the hardware strategy, an auxiliary voltage balancing circuit is added to a circuit topology, and the circuit usually consists of a plurality of switch transistors, a capacitor, an inductor and other components, which will increase the cost of a device. In the existing software strategy, a voltage balance control strategy is added in software, that is, two bus voltages are sampled and the difference between the two is calculated, and the on-off time of each switch transistor is controlled through PI loop regulation, so as to realize balance of the two bus voltages. This scheme will not increase the cost of a device, but it is only suitable for the traditional three-phase rectifier with two buses, not for the single-phase modular combined three-phase rectifier with three buses. When calculating a voltage balancing error of three or more buses, if a voltage balancing strategy for two buses is adopted, where the difference between every two buses is calculated or the difference between the maximum bus voltage and the minimum bus voltage is taken as an error input of a voltage balancing loop, bus voltage balance cannot be effectively realized, and bus voltage imbalance may be aggravated. Because the three-bus single-phase modular combined three-phase rectifier and multi-bus rectifier topology are the future development trend of high-power charging modules, and the bus voltage balancing problem of three-bus and multi-bus topologies is inevitable for such topologies, it's important to provide a technical scheme of bus voltage balancing for three-bus and multi-bus topologies.

CN109980913A discloses a kind of Switching Power Supply. The switching power source comprises: a multi-unit series PFC circuit, wherein the output end of the PFC circuit is connected with N buses, and an output filter capacitor is connected between each two lines in each bus, wherein N is an integer being larger than 1; a direct current isolation unit, wherein the input end of the direct current isolation unit is connected with the N buses, one pair of output ends of the direct current isolation unit are respectively connected with a pair of input ends of a secondary power source, and the direct current isolation unit is configured to isolate from the direct current on the input ends of the direct current isolation unit.

CN109713917A discloses a rectifying device and a rectification control method. The rectifying device includes a three-phase voltage source, energy storage inductors, a unit circuit module and DC/DC converters which are electrically coupled successively. The three-phase voltage source includes a first output terminal, a second output terminal and a third output terminal. The energy storage inductors include a first energy storage inductor, a second energy storage inductor and a third energy storage inductor. The unit circuit module includes a first unit circuit module, a second unit circuit module and a third unit a circuit module.

## SUMMARY

Embodiments of the present disclosure provide a bus voltage balance regulation method for a power converter, a power converter, a storage medium and an electronic device, so as to at least solve one of the related technical problems, including the bus voltage balance control problem of a rectifier circuit to a certain extent.

According to an embodiment of the present disclosure, there is provided a bus voltage balance regulation method according to claim 1.

According to another embodiment of the present disclosure, there is provided a power converter according to claim 8.

According to yet another embodiment of the present disclosure, there is also provided a bus voltage balance regulation method according to claim 5.

According to another embodiment of the present disclosure, there is provided a power converter according to claim 12.

## BRIEF DESCRIPTION OF DRAWINGS

The accompanying drawings described here are used to provide a further understanding of the present disclosure and constitute a part of the present disclosure. The illustrative embodiments of the present disclosure and their descriptions are used to explain the present disclosure. In the accompanying drawings:

Fig. 1 is a flowchart of a bus voltage balance regulation method for a power converter according to an embodiment of the present disclosure, which belongs to a comparative example not falling within the scope of the claims;
Fig. 2 is a schematic diagram of a power conversion apparatus according to an embodiment of the present disclosure;
Fig. 3 is a schematic diagram of a power conversion unit according to an embodiment of the present disclosure;
Fig. 4 is a schematic diagram of control of a power conversion apparatus according to Embodiment I of the present disclosure;
Fig. 5 is a PWM wave and a driving waveform in a switch cycle according to Embodiment I of the present disclosure;
Fig. 6 is a waveform diagram of a three-phase AC input voltage according to Embodiment I of the present disclosure;
Fig. 7 is a PWM wave and a driving waveform in a switch cycle according to Embodiment I of the present disclosure;
Fig. 8 is a flowchart of a voltage balance control algorithm according to Embodiment I of the present disclosure;
Fig. 9 is a schematic diagram of control of a power conversion apparatus according to Embodiment II of the present disclosure;
Fig. 10 is a waveform diagram of a three-phase AC input voltage according to Embodiment II of the present disclosure;
Fig. 11 is a flowchart of a voltage balance control algorithm according to Embodiment II of the present disclosure;
Fig. 12 is a schematic diagram of a power converter according to an embodiment of the present disclosure; and
Fig. 13 is a schematic diagram of an electronic device according to an embodiment of the present disclosure.

## DETAILED DESCRIPTION

The present disclosure will be described in detail below with reference to the accompanying drawings in conjunction with embodiments.

It should be noted that the terms "first", "second", etc. in the description and the claims of the present disclosure and the above-mentioned drawings are intended to distinguish similar objects and are not necessarily to describe a specific order or sequence.

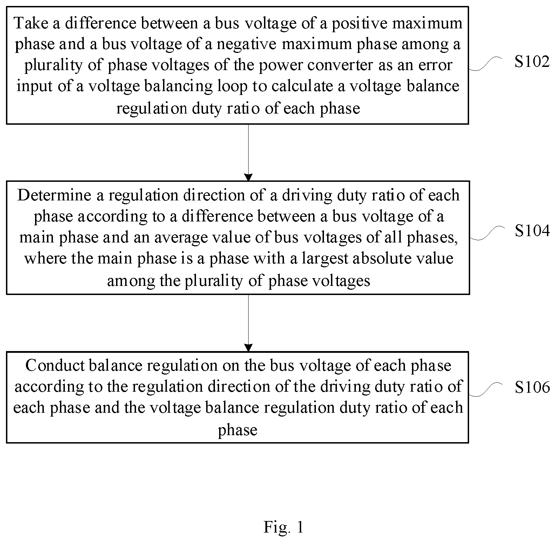

In order to solve the problem that voltages of different bus capacitors in a power converter are different, in this embodiment, there is provided a bus voltage balance regulation method for a power converter. Fig. 1 is a flowchart of the method according to the embodiment of the present disclosure, which belongs to a comparative example not falling within the scope of the claims. As shown in Fig. 1, the method includes the following steps.

At step S102, a difference between a bus voltage of a positive maximum phase and a bus voltage of a negative maximum phase among a plurality of phase voltages of the power converter is taken as an error input of a voltage balancing loop to calculate a voltage balance regulation duty ratio of each phase.

At step S104, a regulation direction of a driving duty ratio of each phase is determined according to a difference between a bus voltage of a main phase and an average value of bus voltages of all phases, where the main phase is a phase with a largest absolute value among the plurality of phase voltages.

At step S106, balance regulation is conducted on the bus voltage of each phase according to the regulation direction of the driving duty ratio of each phase and the voltage balance regulation duty ratio of each phase.

Before step S102 of this embodiment, the method may further include: sampling the plurality of phase voltages of the converter.

In step S104 of this embodiment, in response to the difference between the bus voltage of the main phase and the average value of the bus voltages of all phases being greater than a first preset voltage, the regulation direction of the driving duty ratio of the main phase is determined to be lowering the bus voltage of the main phase, and the regulation directions of the driving duty ratios of other phases are determined to be increasing the bus voltages of other phases; in response to the difference between the bus voltage of the main phase and the average value of the bus voltages of all phases being smaller than a second preset voltage, the regulation direction of the driving duty ratio of the main phase is determined to be increasing the bus voltage of the main phase, and the regulation directions of the driving duty ratios of other phases are determined to be lowering the bus voltages of other phases; or in response to the difference between the bus voltage of the main phase and the average value of the bus voltages of all phases being greater than the second preset voltage and smaller than the first preset voltage, it is determined that no regulation is to be conducted on the bus voltage of each phase.

In step S106 of this embodiment, balance regulation of the bus voltage of each phase can be conducted in the following two approaches.

A first approach includes: superposing the voltage balance regulation duty ratio of each phase, a feedforward duty ratio of each phase and a fine-tuning part of a PWM duty ratio output by a current loop, according to the regulation direction of the driving duty ratio of each phase; and regulating the corresponding bus voltage of each phase according to a duty ratio after superposition of each phase.

A second approach includes: superposing an output value of the voltage balancing loop of each phase to an instantaneous input voltage sampling value of each phase to calculate a feedforward duty ratio of each phase; superposing the feedforward duty ratio of each phase and a fine-tuning part of a PWM duty ratio output by a current loop; and regulating the bus voltage of each phase according to a duty ratio after superposition of each phase.

In step S106 of this embodiment, regulating the bus voltage of each phase according to a duty ratio after superposition of each phase includes: acquiring a modulation wave of each phase according to the duty ratio after superposition of each phase; converting the modulation wave of each phase into a PWM driving signal; and controlling on and off states of a control power switch of the converter according to the PWM driving signal to regulate the bus voltage of each phase.

In the above embodiment, no additional hardware cost is required, and a voltage balance control loop can be added in software. A control error of this loop is obtained by sampling a bus voltage corresponding to a positive maximum input voltage and a bus voltage corresponding to a negative maximum input voltage in real time and calculating a difference between the two. After the error is subjected to PI loop regulation, a regulation direction when an output of the voltage balancing loop is injected into each phase control system is determined according to the difference between the bus voltage of the main phase and the average value of the bus voltages of three phases. The calculation of the loop error is determined according to different sectors in which an input three-phase voltage is located, and the loop error is constantly changing. A direction of voltage balancing compensation of each phase is also determined according to the bus voltage of the main phase of the input voltage. The main phase is also constantly and alternately changing with time. The bus voltage balance control process of three-bus and multi-bus rectifier circuits is more complicated, and control objects are more accurate, so that the charging and discharging time of a bus capacitor of each phase can be accurately changed, and finally charging energy can be balanced.

In order to facilitate the understanding of the technical schemes provided by the embodiments of the present disclosure, detailed description will be given below with reference to specific embodiments.

This embodiment provides a voltage balance control method for a DC bus capacitor in three-bus and multi-bus converters, to solve the problem of voltage difference between bus capacitors in multi-bus three-phase converters.

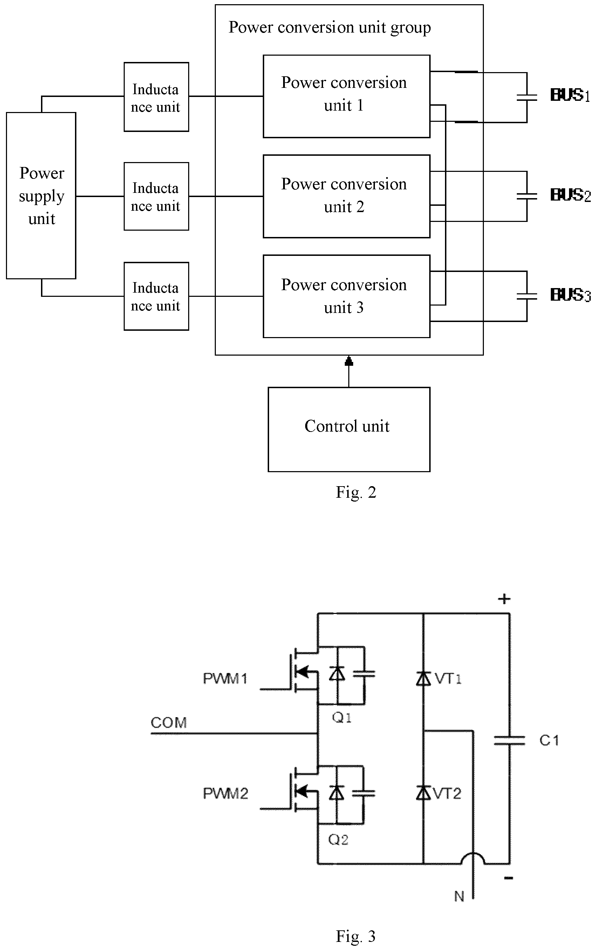

As shown in Fig. 2, in this embodiment, a power conversion apparatus includes a power supply unit, inductance units, a power conversion unit group and a control unit. Here, the power supply unit includes a three-phase AC source, the three inductance units are composed of inductors to realize charging and discharging of a power circuit, and the power conversion unit group includes three power conversion units. Three-phase outputs of the power supply unit are respectively connected in series with the three inductance units, an input at one end of each power conversion unit is connected to the corresponding inductance unit, and the other ends are connected in a star shape. An output of each power conversion unit is connected to one bus capacitor. An output bus voltage of each power conversion unit is used as a power conversion result of the power conversion apparatus.

The control unit is connected to each power conversion unit, inputs a corresponding control signal to each power conversion unit, and controls the on-off time of each power conversion unit to make a bus voltage output by each power conversion unit reach a target value. The control unit also includes a voltage balancing loop to ensure bus voltage balance.

The voltage balancing strategy of this embodiment can adopt the following technical scheme.

A difference between a bus voltage corresponding to a positive maximum input voltage and a bus voltage corresponding to a negative maximum input voltage is calculated and used as an error input of a voltage balancing loop. A difference between a bus voltage of a main phase and an average bus value is calculated to determine a regulation direction of the voltage balancing loop. An output of the voltage balancing loop is injected into each phase control system of a three-phase rectifier according to the determined regulation direction. PWM control signals are generated by a PWM generation module, and then switching elements in the power conversion units in the three-phase converter are controlled by a driving module to turn on and off, so as to control the charging and discharging time of each BUS capacitor, and finally achieve voltage balance.

In this embodiment, the main phase refers to a phase with a largest absolute value of input voltage. The voltage balance regulation direction is determined as follows. In response to the difference between the bus voltage of the main phase and the average value of the bus voltages being greater than a certain voltage, the regulation direction of the main phase is determined to be "+" and the regulation directions of the other two phases are determined to be "-"; that is, the duty ratio of the main phase is to be increased and its corresponding bus voltage is to decreased, and the duty ratios of the other two phases are to be decreased and their corresponding bus voltages are to be increased, thus achieving a balance between the three bus voltages. In response to the difference between the bus voltage of the main phase and the average value of the bus voltages being smaller than a certain voltage, the regulation direction of the main phase is determined to be "-" and the regulation directions of the other two phases are determined to be "+"; that is, the duty ratio of the main phase is to be decreased and its corresponding bus voltage is to be increased, and the duty ratios of the other two phases are to be increased and their corresponding bus voltages are to be decreased, thus achieving a balance between the three bus voltages. In response to the difference between the bus voltage of the main phase and the average value of the bus voltages being smaller than $\Delta u$ and greater than $-\Delta u$, no voltage balance regulation is to be conducted.

Further, the output of the voltage balance control loop is injected into each phase control system of the three-phase rectifier according to the determined regulation direction. According to the determined regulation direction, the output of the voltage balancing loop can be directly superposed on an output duty ratio of a control system to directly control the on-off time of a power switch transistor. The output of the voltage balancing loop can also be injected into the calculation of the feedforward duty ratio of each phase, and the magnitude of the feedforward duty ratio can be adjusted by adjusting the magnitude of an input phase voltage in feedforward calculation, and finally the on-off time of the power switch transistor of each phase can be adjusted. An injection point of the output of the voltage balancing loop may be any control node in the control system. The selection of different injection points has little influence on the voltage balancing effect.

In this embodiment, calculation of the loop error, design of a control loop and calculation of a compensation control direction are conducted. A digital controller used in this embodiment includes, but is not limited to, a DSP, a single chip microcomputer or an ARM. A voltage balancing loop control algorithm used in the embodiment of the present disclosure includes, but is not limited to, a proportional controller, an integral controller, a proportional-integral controller and a proportional-integral-differential controller. Topologies to which the embodiment of the present disclosure can be applied are not limited to single-phase modular combined three-phase rectifiers, but also include other single-phase and three-phase multi-bus topologies such as single-phase multi-channel PFC series circuits, and three-phase star PFC topology circuits and triangle PFC topology circuits.

This embodiment provides three-bus and multi-bus three-phase power conversion apparatuses with an easy-to-use and low-cost digital voltage balance control method. The voltage balance problem of DC capacitors of multi-bus three-phase rectification converters which cannot be solved by existing software voltage balance control methods is solved. With this voltage balance control method, the difference between multiple bus voltages can be controlled within a specified range, an output ripple of a rectifier module can be reduced, and input and output indexes can be improved.

Embodiment I

In this embodiment, a single-phase modular combined three-phase PFC rectifier topology can largely meet the industry requirements of high efficiency, high power density and low cost. As shown in Fig. 2, the power conversion apparatus mainly includes a power supply unit, inductance units, a power conversion unit group and a control unit. Here, the power supply unit includes a three-phase AC source, the three inductance units are composed of inductors to realize charging and discharging of a power circuit, and the power conversion unit group includes three power conversion units. Three-phase outputs of the power supply unit are respectively connected in series with the three inductance units, an input at one end of each power conversion unit is connected to the corresponding inductance unit, and the other ends are connected in a star shape. An output of each power conversion unit is connected to one bus capacitor. An output bus voltage of each power conversion unit is used as a power conversion result of the power conversion apparatus.

The power conversion unit in this embodiment is shown in Fig. 3, where Q1 and Q2 are two power MOS transistors which are high-frequency switching transistors, and driving PWM1 and PWM2 are calculated by the control unit. By controlling a PWM driving duty ratio, the on-off time of the MOS transistors is controlled, thereby controlling a voltage of a bus capacitor C1. VT1 and VT2 are power frequency flyback diodes, including but not limited to power diodes, and power switch transistors such as MOS transistors can also be used. A midpoint COM of the high-frequency MOS transistor is connected to a boost inductor, and a midpoint N of a power frequency diode is connected to points N of other power units to form a star connection.

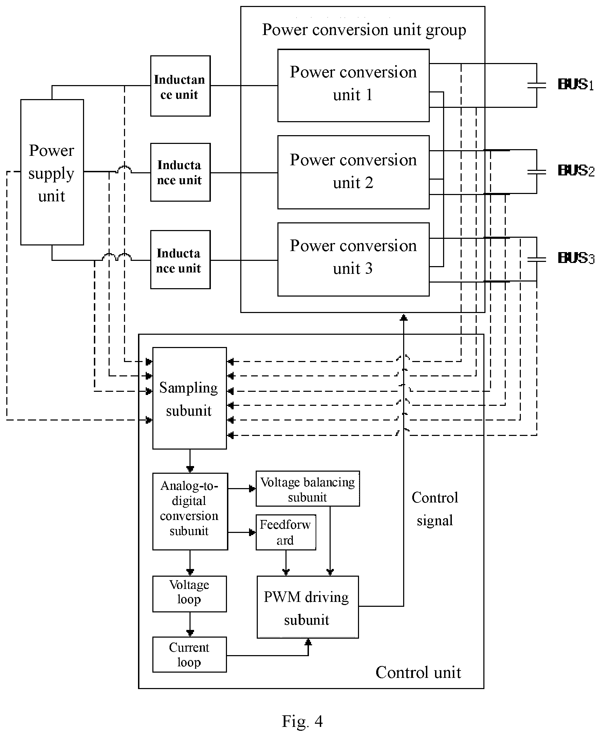

The control unit of this embodiment is shown in Fig. 4. By sampling an input voltage, an inductive current and a bus voltage, the control unit calculates a control signal of each power conversion module through loop control, thus obtaining a stable bus voltage. Specifically, the control unit includes a sampling subunit, an analog-to-digital conversion subunit, a feedforward, a voltage loop, a current loop, a voltage balancing subunit and a PWM driving subunit.

Specifically, in this embodiment, the sampling subunit samples a line voltage of a three-phase power supply, an inductive current of a three-phase inductor and a bus voltage of a three-phase bus through a signal conditioning circuit such as an operational amplifier, and sends a sampled analog quantity to an ADC port of a main control chip DSP.

Further, the analog-to-digital conversion subunit in a DSP converts a sampled analog signal into a digital signal, restores actual voltage and current values, and participates in the calculation of the voltage loop, the current loop and the voltage balancing subunit.

Specifically, a real-time feedforward duty ratio D0 of each phase is calculated based on a target voltage and an input phase voltage of each phase according to the formula $D_0 = 1 - \dfrac{V_{in}}{V_{out}}$, which is a main part of a final duty ratio. The average value of the bus voltages is calculated from the sampled bus voltages of three phases, and a difference between the average value and a target bus voltage is calculated to obtain an error input of the voltage loop, such that the voltage loop (including but not limited to a P controller, a PI controller and a PID controller) calculates and outputs a set-point of the current loop. A difference between the set-point of the current loop and the current of each phase sampled in real time is used as an input of the current loop, and an output D1 of the current loop (including but not limited to a P controller, a PI controller and a PID controller) is a fine-tuning part of the PWM duty ratio.

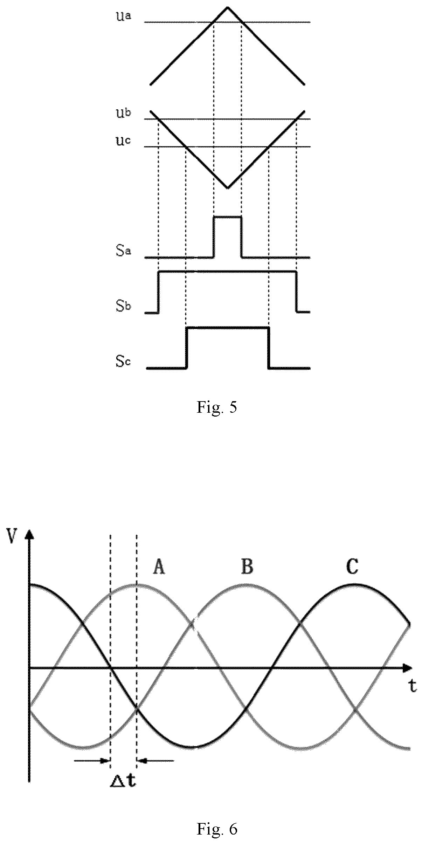

Before the voltage balance control strategy is added, the feedforward duty ratio D0 is superposed with the fine-tuning duty ratio D1, comparison values of all phases, that is, modulation waves Ua, Ub and Uc, are calculated, which, as shown in Fig. 5, are compared with triangular carriers of positive and negative half cycles respectively to obtain switch driving waveforms Sa, Sb and Sc of all phases, which are then respectively sent to the power conversion units of all phases to control the on-off of the switch transistors. In this case, the main phase of is phase A, which is in the positive half cycle, and the phase voltages of phase B and phase C are in the negative half cycle. Waveforms at other times are similar to this. At this point, it is only guaranteed that the bus voltage of each phase is close to the target value, but the bus voltages of the three phases cannot be effectively controlled to be completely equal. Therefore, the voltage balancing subunit is added in the embodiment.

Specifically, taking the time Δt in Fig. 6 as an example, A, B and C are input phase voltages of three phases. After calculating the input phase voltages of the three phases by sampling at Δt, absolute values of the voltages of the three phases are compared. It is concluded that the absolute value of phase A in the positive half cycle is the largest, so phase A is the positive maximum phase and the main phase; phase B is the negative maximum phase; and phase C is a mesophase. The difference between the bus voltages corresponding to the positive and negative maximum phases A and B is calculated and used as the error input of the voltage balancing loop. The absolute values are calculated through the voltage balancing loop (including but not limited to a P controller, a PI controller and a PID controller) to obtain a voltage balance regulation duty ratio D2. This duty ratio needs to be superposed on the final duty ratio according to the voltage balance regulation direction of each phase.

Further, the voltage balance regulation direction is determined by the difference between the bus voltage of the main phase and the average value of the bus voltages of all the three phases. Specifically, in response to the difference between the bus voltage of the main phase and the average value of the bus voltages being greater than a certain voltage Δu, that is, the bus voltage of the main phase being on the high side, the voltage balance regulation direction of the main phase is "+", and the voltage balance regulation directions of the other two phases are "-"; in response to the difference between the bus voltage of the main phase and the average value of the bus voltages being smaller than a certain voltage - Δu, that is, the bus voltage of the main phase being on the low side, the voltage balance regulation direction of the main phase is "-", and the voltage balance regulation directions of the other two phases are "+"; or in response to the difference between the bus voltage of the main phase and the average value of the bus voltages being smaller than Δu and greater than - Δu, no voltage balance regulation is to be conducted.

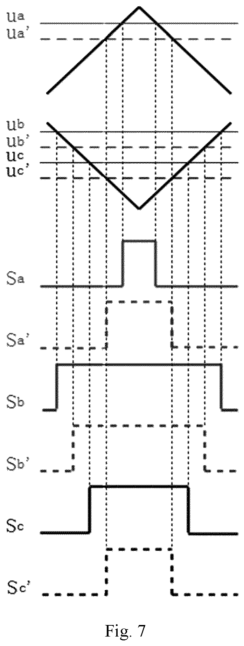

Specifically, assuming that the bus voltage of phase A at time Δt in Fig. 6 is higher than the average value of the bus voltages, then the voltage balance regulation direction of phase A is "+", and the voltage balance regulation direction of phase B and phase C is "-". The duty ratio of phase A is increased by D2 based on the feedforward duty ratio of and a duty ratio of the current loop, and the duty ratio of phase B and phase C is decreased by D2 based on an original duty ratio. Modulation waves after the voltage balancing strategy is added are shown in Fig. 7. Because a carrier wave in the positive half cycle is opposite to a carrier wave in the negative half cycle in this embodiment, inverted A-phase modulation waves in the positive half cycle show a downward shift of ΔU for the original comparison values Ua, Ub and Uc, and comparison values Ua', Ub' and Uc' after voltage balancing are obtained, that is, the same amount is superposed on the modulation waves, which ensures input current balance and no waveform distortion. It can be seen in Fig. 7 that the processed modulation waves Ua'<Ua, Ub'>Ub, Uc'>Uc, and driving waveforms obtained by comparing with the carrier waves are shown as Sa', Sb' and Sc'. After the voltage balance control strategy is added, the driving duty ratio of phase A increases, the duty ratios of phase B and phase C decrease, and the increase amount is equal to the decrease amount, so that the charging time of a bus capacitor of phase A is shortened and the bus voltage is reduced, and the charging time of bus capacitors of phase B and phase C is longer and the corresponding bus voltages are increased, thus achieving three-phase bus voltage balance. If the bus voltage of phase A at time Δt in Fig. 6 is lower than the average value of the bus voltages of the three phases, the voltage balance regulation direction is opposite to that in Fig. 7. If the bus voltage of phase A is equal to the average value of the bus voltages of the three phases, voltage balance regulation is not conducted, and the driving waveforms of all the phases are still Sa, Sb and Sc. The regulation method at any other time and under other voltage imbalance conditions is similar to this.

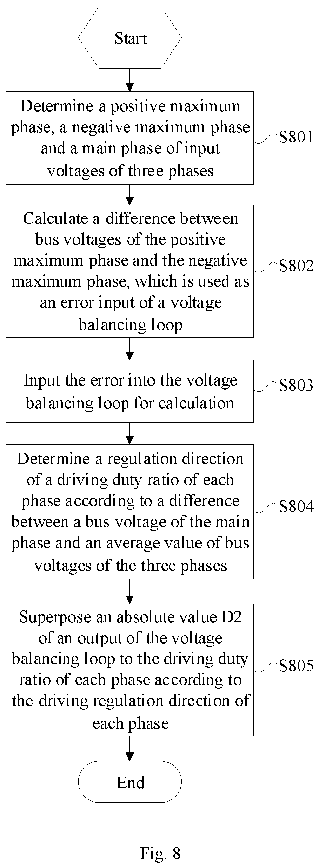

The three-phase voltage balance control flow used in this example is shown in Fig. 8. The flow mainly includes the following steps.

At step S801, a positive maximum phase, a negative maximum phase and a main phase are determined according to the sampling of input phase voltages of three phases, the main phase being the phase with the input phase voltage having the largest absolute value.

At step S802, a difference between bus voltages of the positive maximum phase and the negative maximum phase is calculated and used as an error input of a voltage balancing loop.

At step S803, the error is input into the voltage balancing loop for calculation, where the voltage balancing loop may be a PI controller, a PID controller, or other control algorithms, and in this example, an absolute value of an output of the voltage balancing loop takes the value of D2.

At step S804, a regulation direction of a driving duty ratio of each phase is determined according to a difference between a bus voltage of the main phase and an average value of bus voltages of the three phases. That is, in response to the difference between the bus voltage of the main phase and the average value of the bus voltages being greater than a certain voltage Δu, the regulation direction of the driving duty ratio of the main phase is determined to be "+", and the regulation directions of the driving duty ratio of the other two phases are determined to be "-"; in response to the difference between the bus voltage of the main phase and the average value of the bus voltages being smaller than a certain voltage - Δu, the regulation direction of the driving duty ratio of the main phase is determined to be "-", and the regulation directions of the driving duty ratio of the other two phases are determined to be "+"; or in response to the difference between the bus voltage of the main phase and the average value of the bus voltages being smaller than Δu and greater than - Δu, it is determined that no voltage balance regulation is to be conducted.

At step S805, the absolute value D2 of the output of the voltage balancing loop is superposed to the driving duty ratio of each phase according to the driving regulation direction of each phase.

According to the above embodiment, the PWM wave is optimized in the PWM driving subunit to obtain the driving signal, and a driving circuit acts on the power switch transistor in the power conversion unit to control the charging time of each capacitor, thus achieving the effect of active voltage balancing.

In this embodiment, only simple calculation and logical judgment are needed, which is very suitable for digital control. The controller in the above technical scheme includes but is not limited to a single-chip microcomputer, a DSP, an ARM, etc. This technical scheme is applicable, but not limited, to single-phase modular combined three-phase PFC circuits, and can also be used for any rectifier circuit requiring multi-bus voltage balancing.

Embodiment II

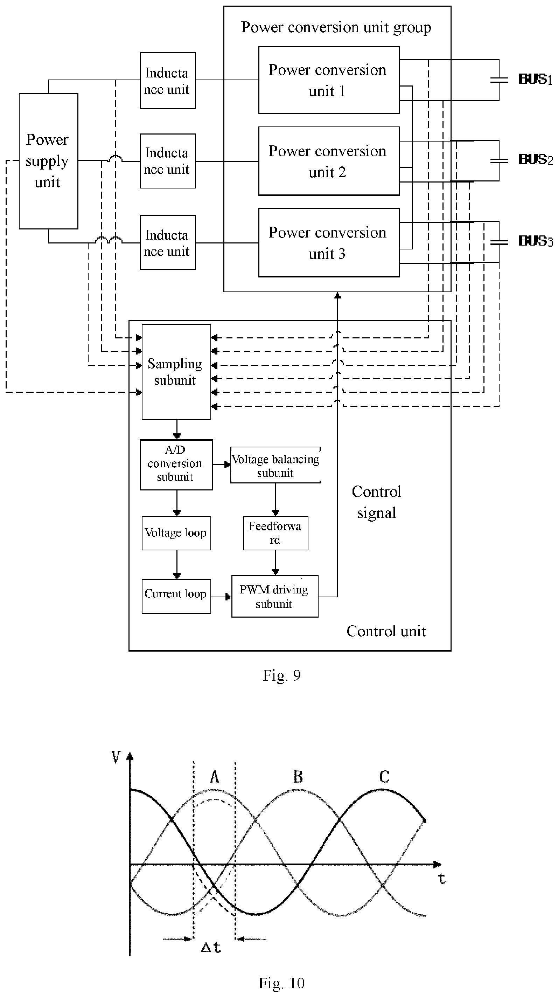

The power part of this embodiment is the same as that of Embodiment I. As shown in Fig. 9, the power conversion apparatus mainly includes a power supply unit, inductance units, a power conversion unit group and a control unit. Here, the power supply unit includes a three-phase AC source, the three inductance units are composed of inductors to realize charging and discharging of a power circuit, and the power conversion unit group includes three power conversion units. Three-phase outputs of the power supply unit are respectively connected in series with the three inductance units, an input at one end of each power conversion unit is connected to the corresponding inductance unit, and the other ends are connected in a star shape. An output of each power conversion unit is connected to one bus capacitor. An output bus voltage of each power conversion unit is used as a power conversion result of the power conversion apparatus.

As shown in Fig. 9, by sampling an input voltage, an inductive current and a bus voltage, the control unit calculates a control signal of each power conversion module through loop control, thus obtaining a stable bus voltage. Specifically, the control unit includes a sampling subunit, an analog-to-digital conversion subunit, a voltage loop, a current loop, a voltage balancing subunit, a feedforward and a PWM driving subunit.

Specifically, the sampling subunit samples a line voltage of a three-phase power supply, an inductive current of a three-phase inductor and a bus voltage of a three-phase bus through a signal conditioning circuit such as an operational amplifier, and sends a sampled analog quantity to an ADC port of a main control chip DSP.

Further, the analog-to-digital conversion subunit in a DSP converts a sampled analog signal into a digital signal, restores actual voltage and current values, and participates in the calculation of the feedforward, the voltage loop, the current loop and the voltage balancing subunit.

Specifically, the average value of the bus voltages is calculated from the sampled bus voltages of three phases, and a difference between the average value and a target bus voltage is calculated to obtain an error input of the voltage loop, such that the voltage loop (including but not limited to a P controller, a PI controller and a PID controller) calculates and outputs a set-point of the current loop. A difference between the set-point of the current loop and the current of each phase sampled in real time is used as an input of the current loop, and an output D1 of the current loop (including but not limited to a P controller, a PI controller and a PID controller) is a fine-tuning part of the PWM duty ratio.

A feedforward duty ratio is theoretically calculated based on a target voltage and an input phase voltage of each phase according to the formula

$$D_0 = 1 - \frac{V_{in}}{V_{out}}$$ . In order to ensure bus voltage balance of the three phases, an output of a voltage balancing loop is added to Vin to participate in the calculation of the feedforward duty ratio in this embodiment, and the feedforward duty ratio is changed by regulating Vin. By comparing the sum of the output D1 of the current loop and a feedforward D0 with a carrier wave, a PWM driving signal of a power switch of each phase can be obtained, so as to control the on and off of the power switches and realize bus voltage balance.

Specifically, an error input of the voltage balancing loop is a difference between the bus voltage of a positive maximum phase and the bus voltage of a negative maximum phase, and an output |ΔU| of the voltage balancing loop (including but not limited to a P controller, a PI controller and a PID controller) is calculated. According to a superposition symbol, it is added to the feedforward calculation of each phase.

Further, the superposition symbol is determined by a product of a voltage balance regulation direction and an input voltage direction of a main phase, and the voltage balance regulation direction is determined by a difference between the bus voltage of the main phase and the average value of the bus voltages of the three phases. In response to the difference between the bus voltage of the main phase and the average value of the bus voltages being greater than a certain voltage Δu, that is, the bus voltage of the main phase being on the high side, the voltage balance regulation direction of the main phase is determined to be "-"; in response to the difference between the bus voltage of the main phase and the average value of the bus voltages being smaller than a certain voltage - Δu, that is, the bus voltage of the main phase being on the low side, the voltage balance regulation direction of the main phase is determined to be "+"; or in response to the difference between the bus voltage of the main phase and the average value of the bus voltages being smaller than Δu and greater than - Δu, the voltage balance regulation direction is determined to be "0", that is, no regulation is to be conducted. When an input voltage of the main phase is in the positive half cycle, an input voltage direction is "+", and when the input voltage of the main phase is in the negative half cycle, the input voltage direction is "-". A product of the voltage balance regulation direction of the main phase and the input voltage direction of the main phase is the superposition symbol of Vin in the feedforward calculation formula for each phase, and superposition values are the output of the voltage balancing loop |ΔU|.

Specifically, in Fig. 10, an absolute value of an input voltage of phase A is the largest at time Δt, so phase A is the main phase. It is assumed that in this case, the difference between the bus voltage of phase A and the average value of the bus voltages of the three phases is greater than a certain voltage Δu, that is, the bus voltage of phase A is on the high side. The voltage balance regulation direction is "-", and the input voltage of the main phase is in the positive half cycle at this point, so that the input voltage direction is "+", and thus the product of the two directions is "-", that is, the superposition symbol for each phase is "-". Therefore, in Fig. 10, the input voltages of the three phases all shift downward by |ΔU| at time Δt. After shifting, a modulus of the input voltage of phase A decreases. According to the formula

$$D_0 = 1 - \frac{V_{in}}{V_{out}}$$ (where Vin is a modulus of an instantaneous value of the phase voltage), when Vin decreases, the feedforward duty ratio D0 increases, the charging time of the bus capacitors decreases, and the bus voltage of phase A decreases. In addition, after shifting, moduli of input voltages of phase B and phase C increase. According to the formula $D_0 = 1 - \dfrac{V_{in}}{V_{out}}$ (where Vin is the modulus of the instantaneous value of the phase voltage), when Vin increases, the feedforward duty ratio D0 decreases, the charging time of the bus capacitors increases, and the bus voltages of phase B and phase C increase. In this way, bus voltage balance of the three phases A, B and C is realized. The regulation method at other time and under other voltage imbalance conditions is similar to this.

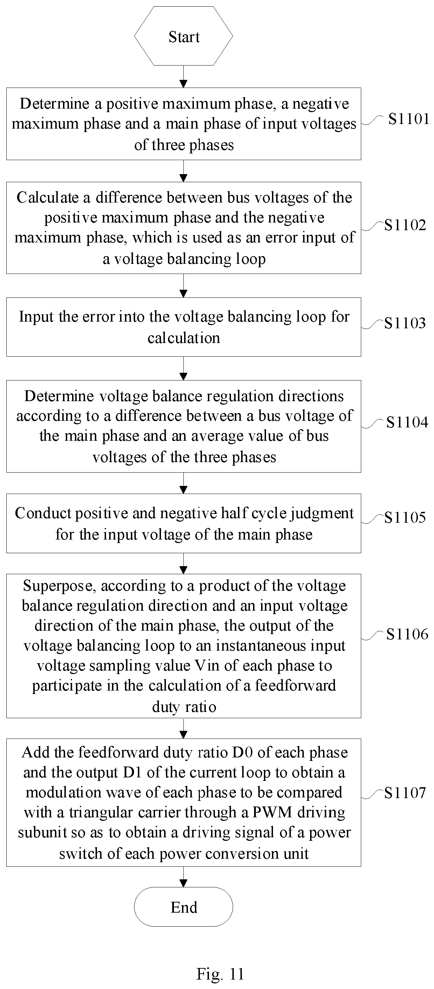

The three-phase voltage balance control flow used in this example is shown in Fig. 11. The flow mainly includes the following steps.

At step S1101, a positive maximum phase, a negative maximum phase and a main phase are determined according to the sampling of input phase voltages of three phases, the main phase being a phase with a largest absolute value of input phase voltage.

At step S1102, a difference between bus voltages of the positive maximum phase and the negative maximum phase is calculated and used as an error input of a voltage balancing loop.

At step S1103, the voltage balancing loop may use a PI controller, a PID controller, or other control algorithms. In this example, an absolute value of an output of the voltage balancing loop takes the value of |ΔU|.

At step S1104, voltage balance regulation directions are determined according to a difference between a bus voltage of the main phase and an average value of bus voltages of the three phases. In response to the difference between the bus voltage of the main phase and the average value of the bus voltages being greater than a certain voltage $\Delta u$, that is, the bus voltage of the main phase being on the high side, the voltage balance regulation direction of the main phase is determined to be "-"; in response to the difference between the bus voltage of the main phase and the average value of the bus voltages being smaller than a certain voltage $-\Delta u$, that is, the bus voltage of the main phase being on the low side, the voltage balance regulation direction of the main phase is determined to be "+"; or in response to the difference between the bus voltage of the main phase and the average value of the bus voltages being smaller than $\Delta u$ and greater than $-\Delta u$, the voltage balance regulation direction is determined to be "0", that is, no regulation is to be conducted.

At step S1105, positive and negative half cycle judgment is conducted for the input voltage of the main phase, where the input voltage direction in the positive half cycle is "+" and the input voltage direction in the negative half cycle is "-".

At step S1106, the output of the voltage balancing loop is superposed, according to a product of the voltage balance regulation direction and the input voltage direction of the main phase (i.e., a voltage balance superposition symbol), to an instantaneous input voltage sampling value Vin of each phase to participate in the calculation of the feedforward duty ratio.

At step S1107, the feedforward duty ratio D0 of each phase and the output D1 of the current loop are added together to obtain a modulation wave of each phase to be compared with a triangular carrier through a PWM driving subunit so as to obtain a driving signal of a power switch of each power conversion unit.

Through the above method, the feedforward duty ratio is directly optimized to obtain the final driving signal, and a driving circuit acts on the power switch to control the charging time of each capacitor, thus achieving the effect of active voltage balancing. This method only needs simple calculation and logical judgment, which is very suitable for digital control and does not need to increase any hardware cost. The controller in the above technical scheme includes but is not limited to a single-chip microcomputer, a DSP, an ARM, etc. This technical scheme is applicable, but not limited, to single-phase modular combined three-phase PFC circuits, and can also be used for any rectifier circuit requiring multi-bus voltage balancing.

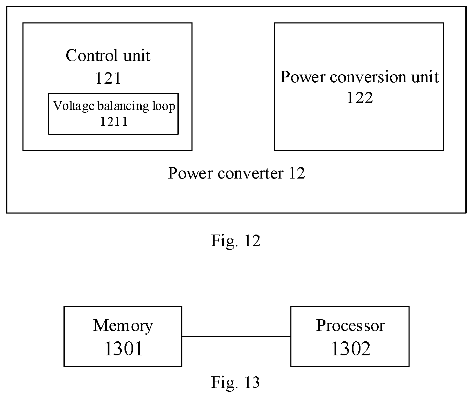

Referring to Fig. 12, according to another embodiment of the present disclosure, there is provided a power converter 12, including: a control unit 121 and a power conversion unit 122, where the control unit 121 includes a voltage balancing loop 1211, and the voltage balancing loop 1211 is configured to take a difference between a bus voltage of a positive maximum phase and a bus voltage of a negative maximum phase among a plurality of phase voltages of the power converter 12 as an error input to calculate a voltage balance regulation duty ratio of each phase, and determine a regulation direction of a driving duty ratio of each phase according to a difference between a bus voltage of a main phase and an average value of bus voltages of all phases, the main phase being a phase with a largest absolute value among the plurality of phase voltages. The power conversion unit 122 is configured to conduct balance regulation on the bus voltage of each phase of the power converter 12 according to the regulation direction of the driving duty ratio of each phase and the voltage balance regulation duty ratio of each phase.

Referring to Figs. 4 and 9, in some embodiments, the control unit further includes: a sampling subunit configured to sample the plurality of phase voltages of the converter.

In some embodiments, the voltage balancing loop determines the regulation direction of the driving duty ratio of each phase by at least one of: in response to the difference between the bus voltage of the main phase and the average value of the bus voltages of all phases being greater than a first preset voltage, determining the regulation direction of the driving duty ratio of the main phase to be lowering the bus voltage of the main phase and the regulation directions of the driving duty ratios of other phases to be increasing the bus voltages of other phases; in response to the difference between the bus voltage of the main phase and the average value of the bus voltages of all phases being smaller than a second preset voltage, the regulation direction of the driving duty ratio of the main phase is determined to be increasing the bus voltage of the main phase, and the regulation directions of the driving duty ratios of other phases are determined to be lowering the bus voltages of other phases; or in response to the difference between the bus voltage of the main phase and the average value of the bus voltages of all phases being greater than the second preset voltage and smaller than the first preset voltage, determining to conduct no regulation on the bus voltage of each phase.

In some embodiments, the control unit further includes: an analog-to-digital conversion subunit configured to convert sampled phase voltages of the plurality of phase voltages from analog signals to digital signals; a feedforward subunit configured to calculate a feedforward duty ratio of each phase according to a target voltage and an input phase voltage of each phase; a voltage loop configured to take a difference between the average value of the bus voltages of all phases and the target bus voltage as an error input for calculation to output a set-point of a current loop; the current loop configured to take a difference between the set-point of the current loop and each phase current as an input of the current loop and output a fine-tuning part of a PWM duty ratio; and a PWM driving subunit configured to superpose the voltage balance regulation duty ratio of each phase, the feedforward duty ratio of each phase and the fine-tuning part of the PWM duty ratio according to the regulation direction of the driving duty ratio of each phase, acquire a modulation wave of each phase according to a duty ratio after superposition of each phase, convert the modulation wave of each phase into a PWM driving signal, and output the PWM driving signal to the power conversion unit.

In some embodiments, the control unit further includes: an analog-to-digital conversion subunit configured to convert sampled phase voltages of the plurality of phase voltages from analog signals to digital signals; a voltage loop configured to take a difference between the average value of the bus voltages of all phases and the target bus voltage as an error input for calculation to output a set-point of a current loop; the current loop configured to take a difference between the set-point of the current loop and each phase current as an input of the current loop and output a fine-tuning part of a PWM duty ratio; a feedforward subunit configured to superpose an output value of the voltage balancing loop of each phase to an instantaneous input voltage sampling value of each phase to calculate a feedforward duty ratio of each phase; and a PWM driving subunit configured to superpose the feedforward duty ratio of each phase and the fine-tuning part of the PWM duty ratio according to the regulation direction of the driving duty ratio of each phase, acquire a modulation wave of each phase according to a duty ratio after superposition of each phase, convert the modulation wave of each phase into a PWM driving signal, and output the PWM driving signal to the power conversion unit.

In some embodiments, the power conversion unit is further configured to: control on and off states of a control power switch of the converter according to the PWM driving signal to regulate the bus voltage of each phase.

Through the description of the above embodiments, those having ordinary skill in the art can clearly understand that the method according to the above embodiments may be realized by means of software in addition to necessary general-purpose hardware platforms, and of course may also be realized by hardware, but the former is a more preferable implementation in many cases. Based on this understanding, the substance or the parts that contribute to the existing technology of the technical schemes of the embodiments of the present disclosure may be embodied in the form of software products, which are stored in a storage medium (such as an ROM/RAM, a magnetic disk, and an optical disk) and include a number of instructions to cause a terminal device (such as a mobile phone, a computer, a server, or a network device) to perform the methods of various embodiments of the present disclosure.

The present disclosure further provides a storage medium storing a computer program, where the computer program is configured to, when executed, cause the steps which can be executed by a computer of any of the above method embodiments to be implemented.

The above-mentioned storage medium may include, but is not limited to, various media that can store computer programs, such as a USB flash drive, read-only memory (ROM), random access memory (RAM), mobile hard disk, magnetic disk or optical disk.

Referring to Fig. 13, the present disclosure further provides an electronic device, including a memory 1301 and a processor 1302, where a computer program is stored in the memory 1301, and the processor 1302 is configured to execute the computer program to implement steps which can be executed by a computer in any of the above method embodiments.

The electronic device above may further include transmission apparatus and input/output apparatus, where the transmission apparatus is connected to the processor and the input/output apparatus is connected to the processor.

For specific examples of this embodiment, the examples described in the above embodiments and alternative implementations can be referred to, which will not be repeated here in this embodiment.

In the above embodiments of the present disclosure, no additional hardware cost is required, and a voltage balance control loop can be added in software. A control error of this loop is obtained by sampling a bus voltage corresponding to a positive maximum input voltage and a bus voltage corresponding to a negative maximum input voltage in real time and calculating a difference between the two. After the error is subjected to PI loop regulation, a regulation direction when an output of the voltage balancing loop is injected into each phase control system is determined according to the difference between the bus voltage of the main phase and the average value of the bus voltages of other phases, so as to accurately change the charging and discharging time of the bus capacitor of each phase and realize bus voltage balance among different phases.

Obviously, those having ordinary skill in the art should understand that the above modules or steps of the present disclosure may be implemented by a general-purpose computing device and may be concentrated in one single computing device or distributed in a network composed of a plurality of computing devices, and alternatively, may be implemented by program codes executable by a computing device, so that they can be stored in a storage device and executed by the computing device(s). Moreover, in some cases, the steps shown or described herein can be performed in a different order, or they can be made into individual integrated circuit modules, or a plurality of the modules or steps can be made into one single integrated circuit module. Therefore, the present disclosure is not limited to any particular combination of hardware and software.

**Claims**

1. A bus voltage balance regulation method for a power converter, wherein the power converter is a three-phase power converter and each converter phase has a DC bus capacitor, comprising:

    taking, in real time, a difference between a bus voltage of a DC bus capacitor of the converter phase receiving a greatest positive phase voltage among the plurality of phase voltages and a bus voltage of a DC bus capacitor of the converter phase at the same time receiving, in absolute value, a greatest negative phase voltage among the plurality of phase voltages (S802), and calculating a voltage balance regulation duty ratio of each converter phase using said difference (S803);
    determining a voltage balance regulation direction of each converter phase according to a difference between a bus voltage of a main converter phase and an average value of bus voltages of all converter phases, wherein the main converter phase is a converter phase with a largest absolute value among the plurality of phase voltages (S801, S804); and
    conducting balance regulation on the bus voltage of each converter phase according to the voltage balance regulation direction of each converter phase and the voltage balance regulation duty ratio of each converter phase (S805);
wherein determining the voltage balance regulation direction of each converter phase according to a difference between a bus voltage of a main converter phase and an average value of bus voltages of all converter phases (S804) comprises:

    in response to the difference between the bus voltage of the main converter phase and the average value of the bus voltages of all converter phases being greater than a first preset voltage, determining the voltage balance regulation direction of the main converter phase to be lowering the bus voltage of the main converter phase and the voltage balance regulation directions of the other converter phases to be increasing the bus voltages of other converter phases;
    in response to the difference between the bus voltage of the main converter phase and the average value of the bus voltages of all converter phases being smaller than a second preset voltage, determining the voltage balance regulation direction of the main converter phase to be increasing the bus voltage of the main converter phase and the voltage balance regulation directions of the other converter phases to be lowering the bus voltages of other converter phases; and
    in response to the difference between the bus voltage of the main converter phase and the average value of the bus voltages of all converter phases being greater than the second preset voltage and smaller than the first preset voltage, determining to conduct no voltage balance regulation on the bus voltage of each converter phase.

2. The method of claim 1, before the step of taking a difference between a bus voltage of a DC bus capacitor of the converter phase receiving a greatest positive phase voltage among the plurality of phase voltages and a bus voltage of a DC bus capacitor of the converter phase at the same certain time receiving, in absolute value, a greatest negative phase voltage among the plurality of phase voltages, further comprising:
sampling the plurality of phase voltages of the converter.

3. The method of claim 1, wherein conducting balance regulation on the bus voltage of each converter phase according to the voltage balance regulation direction of each converter phase and the voltage balance regulation duty ratio of each converter phase (S805) comprises:

superposing the voltage balance regulation duty ratio of each converter phase, a feedforward duty ratio of each converter phase and a fine-tuning part of a PWM duty ratio output by a current loop, according to the regulation direction of the driving duty ratio of each converter phase; and
regulating the bus voltage of each converter phase according to a duty ratio after superposition of each converter phase.

4. The method of claim 3, wherein regulating the bus voltage of each converter phase according to a duty ratio after superposition of each converter phase comprises:

acquiring a modulation wave of each converter phase according to the duty ratio after superposition of each converter phase;
converting the modulation wave of each converter phase into a PWM driving signal; and
controlling on and off states of a control power switch of the converter according to the PWM driving signal to regulate the bus voltage of each converter phase.

5. A bus voltage balance regulation method for a power converter, wherein the power converter is a three-phase power converter and each converter phase has a DC bus capacitor, comprising:

taking, in real time, a difference between a bus voltage of a DC bus capacitor of the converter phase receiving a greatest positive phase voltage among the plurality of phase voltages and a bus voltage of a DC bus capacitor of the converter phase at the same time receiving, in absolute value, a greatest negative phase voltage among the plurality of phase voltages, to calculate an output of a voltage balancing loop, and calculating a feedforward duty ratio of each phase based on the output of the voltage balancing loop and an instantaneous input voltage sampling value (Vin) of each converter phase (S1101, S1102);
determining a voltage balance regulation direction of each converter phase according to a difference between a bus voltage of a main converter phase and an average value of bus voltages of all converter phases, wherein the main converter phase is a converter phase with a largest absolute value among the plurality of phase voltages (S1103, S1104); and
conducting balance regulation on the bus voltage of each converter phase according to the voltage balance regulation direction of each converter phase and the feedforward duty ratio of each converter phase (S1105, S1106),
wherein determining the voltage balance regulation direction of each converter phase according to a difference between a bus voltage of a main converter phase and an average value of bus voltages of all converter phases (S1104) comprises:

in response to the difference between the bus voltage of the main converter phase and the average value of the bus voltages of all converter phases being greater than a first preset voltage, determining the voltage balance regulation direction of the main converter phase to be lowering the bus voltage of the main converter phase and the voltage balance regulation directions of the other converter phases to be increasing the bus voltages of other converter phases;
in response to the difference between the bus voltage of the main converter phase and the average value of the bus voltages of all converter phases being smaller than a second preset voltage, determining the voltage balance regulation direction of the main converter phase to be increasing the bus voltage of the main converter phase and the voltage balance regulation directions of the other converter phases to be lowering the bus voltages of other converter phases; and
in response to the difference between the bus voltage of the main converter phase and the average value of the bus voltages of all converter phases being greater than the second preset voltage and smaller than the first preset voltage, determining to conduct no voltage balance regulation on the bus voltage of each converter phase.

6. The method of claim 5, wherein conducting balance regulation on the bus voltage of each converter phase according to the regulation direction of each converter phase and the feedforward duty ratio of each converter phase comprises:

superposing an output value of the voltage balancing loop of each converter phase to an instantaneous input voltage sampling value of each converter phase to calculate the feedforward duty ratio of each converter phase;
superposing the feedforward duty ratio of each converter phase and a fine-tuning part of a PWM duty ratio output by a current loop; and
regulating the bus voltage of each converter phase according to a duty ratio after superposition of each converter phase.

7. The method of claim 6, wherein regulating the bus voltage of each converter phase according to a duty ratio after superposition of each converter phase comprises:

acquiring a modulation wave of each converter phase according to the duty ratio after superposition of each converter phase;
converting the modulation wave of each converter phase into a PWM driving signal; and
controlling on and off states of a control power switch of the converter according to the PWM driving signal to regulate the bus voltage of each converter phase.

8. A power converter (12), wherein the power converter is a three-phase power converter and each converter phase has a DC bus capacitor, comprising:
a control unit (121), comprising:

a voltage balancing loop (1211) configured to take, in real time, take a difference between a bus voltage of a DC bus capacitor of the converter phase receiving a greatest positive phase voltage among the plurality of phase voltages and a bus voltage of a DC bus capacitor of the converter phase at the same time receiving, in absolute value, a greatest negative phase voltage among the plurality of phase voltages to calculate a voltage balance regulation duty ratio of each converter phase, and determine a voltage balance regulation direction of each converter phase according to a difference between a bus voltage of a main converter phase and an average value of bus voltages of all converter phases, the main converter phase being a converter phase with a largest absolute value among the plurality of phase voltages; and;
a plurality of power conversion units (122) configured to conduct balance regulation on the bus voltage of each converter phase of the power converter (12) according to the voltage balance regulation direction of each converter phase and the voltage balance regulation duty ratio of each converter phase,
wherein the voltage balancing loop (1211) is configured to determine the voltage balance regulation direction of each converter phase by:

in response to the difference between the bus voltage of the main converter phase and the average value of the bus voltages of all converter phases being greater than a first preset voltage, determining the voltage balance regulation direction of the main converter phase to be lowering the bus voltage of the main converter phase and the voltage balance regulation directions of the other converter phases to be increasing the bus voltages of other converter phases;
in response to the difference between the bus voltage of the main converter phase and the average value of the bus voltages of all converter phases being smaller than a second preset voltage, the voltage balance regulation direction of the main converter phase is determined to be increasing the bus voltage of the main converter phase, and the voltage balance regulation directions of the other converter phases are determined to be lowering the bus voltages of other converter phases; and
in response to the difference between the bus voltage of the main converter phase and the average value of the bus voltages of all converter phases being greater than the second preset voltage and smaller than the first preset voltage, determining to conduct no voltage balance regulation on the bus voltage of each converter phase.

9. The power converter (12) of claim 8, wherein the control unit (121) further comprises:
a sampling subunit configured to sample the plurality of phase voltages of the converter.

10. The power converter (12) of claim 8, wherein the control unit (121) further comprises:

an analog-to-digital conversion subunit configured to convert sampled phase voltages of the plurality of phase voltages from analog signals to digital signals;
a feedforward subunit configured to calculate a feedforward duty ratio of each converter phase according to a target voltage and an input phase voltage of each converter phase;
a voltage loop configured to take a difference between the average value of the bus voltages of all converter phases and the target bus voltage as an error input for calculation to output a set-point of a current loop;
the current loop configured to take a difference between the set-point of the current loop and each converter phase current as an input of the current loop and output a fine-tuning part of a PWM duty ratio; and
a PWM driving subunit configured to superpose the voltage balance regulation duty ratio of each converter phase, the feedforward duty ratio of each converter phase and the fine-tuning part of the PWM duty ratio according to the voltage balance regulation direction of each converter phase, acquire a modulation wave of each converter phase according to a duty ratio after superposition of each converter phase, convert the modulation wave of each converter phase into a PWM driving signal, and output the PWM driving signal to the power conversion units (122).

11. The power converter (12) of claim 10, wherein the power conversion units (122) are further configured to:
control on and off states of a control power switch of the converter according to the PWM driving signal to regulate the bus voltage of each converter phase.

12. A power converter (12), wherein the power converter is a three-phase power converter and each converter phase has a DC bus capacitor, comprising:
a control unit (121), comprising:

a voltage balancing loop (1211) configured to take, in real time, a difference between a bus voltage of a DC bus capacitor of the converter phase receiving a greatest positive phase voltage among the plurality of phase voltages and a bus voltage of a DC bus capacitor of the converter phase at the same time receiving, in absolute value, a greatest negative phase voltage among the plurality of phase voltages, and determine a voltage balance regulation direction of each converter phase according to a difference between a bus voltage of a main converter phase and an average value of bus voltages of all converter phases, the main converter phase being a converter phase with a largest absolute value among the plurality of phase voltages;
a feedforward subunit configured to calculate a feedforward duty ratio of each phase based on said difference and an instantaneous input voltage sampling value (Vin) of each converter phase; and;
a plurality of power conversion units (122) configured to conduct balance regulation on the bus voltage of each converter phase of the power converter (12) according to the regulation direction of each converter phase and the feedforward duty ratio of each converter phase,
wherein the voltage balancing loop (1211) is configured to determine the regulation direction of each converter phase by:

in response to the difference between the bus voltage of the main converter phase and the average value of the bus voltages of all converter phases being greater than a first preset voltage, determining the voltage balance regulation direction of the main converter phase to be lowering the bus voltage of the main converter phase and the voltage balance regulation directions of the other converter phases to be increasing the bus voltages of other converter phases;
in response to the difference between the bus voltage of the main converter phase and the average value of the bus voltages of all converter phases being smaller than a second preset voltage, the voltage balance regulation direction of the main converter phase is determined to be increasing the bus voltage of the main converter phase, and the voltage balance regulation directions of the driving duty ratios of other converter phases are determined to be lowering the bus voltages of other converter phases; and
in response to the difference between the bus voltage of the main converter phase and the average value of the bus voltages of all converter phases being greater than the second preset voltage and smaller than the first preset voltage, determining to conduct no voltage balance regulation on the bus voltage of each converter phase.

13. The power converter (12) of claim 12, wherein the control unit (121) further comprises:

an analog-to-digital conversion subunit configured to convert sampled phase voltages of the plurality of phase voltages from analog signals to digital signals;
a voltage loop configured to take a difference between the average value of the bus voltages of all converter phases and the target bus voltage as an error input for calculation to output a set-point of a current loop;
the current loop configured to take a difference between the set-point of the current loop and each converter phase current as an input of the current loop and output a fine-tuning part of a PWM duty ratio;
said feedforward subunit configured to superpose an output value of the voltage balancing loop (1211) of each converter phase to an instantaneous input voltage sampling value of each converter phase to calculate a feedforward duty ratio of each converter phase; and
a PWM driving subunit configured to superpose the feedforward duty ratio of each converter phase and the fine-tuning part of the PWM duty ratio according to the voltage balance regulation direction of each converter phase, acquire a modulation wave of each converter phase according to a duty ratio after superposition of each converter phase, convert the modulation wave of each converter phase into a PWM driving signal, and output the PWM driving signal to the power conversion units (122).

## Patentansprüche

1. Busspannungssymmetrieregelungsverfahren für einen Leistungswandler, wobei der Leistungswandler ein dreiphasiger Leistungswandler ist und jede Wandlerphase einen DC-Buskondensator aufweist, umfassend:

Erfassen, in Echtzeit, einer Differenz zwischen einer Busspannung eines DC-Buskondensators der Wandlerphase, die eine größte positive Phasenspannung aus der Vielzahl von Phasenspannungen empfängt, und einer Busspannung eines DC-Buskondensators der Wandlerphase, die gleichzeitig in Absolutwert eine größte negative Phasenspannung aus der Vielzahl von Phasenspannungen empfängt (S802), und Berechnen eines Spannungssymmetrieregelungstastverhältnisses jeder Wandlerphase unter Verwendung der Differenz (S803);
Bestimmen einer Spannungssymmetrieregelungsrichtung jeder Wandlerphase gemäß einer Differenz zwischen einer Busspannung einer Hauptwandlerphase und einem Durchschnittswert von Busspannungen aller Wandlerphasen, wobei die Hauptwandlerphase eine Wandlerphase mit einem größten Absolutwert aus der Vielzahl von Phasenspannungen ist (S801, S804); und
Durchführen von Symmetrieregelung an der Busspannung jeder Wandlerphase gemäß der Spannungssymmetrieregelungsrichtung jeder Wandlerphase und dem Spannungssymmetrieregelungstastverhältnis jeder Wandlerphase (S805);
wobei das Bestimmen der Spannungssymmetrieregelungsrichtung jeder Wandlerphase gemäß einer Differenz zwischen einer Busspannung einer Hauptwandlerphase und einem Durchschnittswert von Busspannungen aller Wandlerphasen (S804) Folgendes umfasst:

als Reaktion darauf, dass die Differenz zwischen der Busspannung der Hauptwandlerphase und dem Durchschnittswert der Busspannungen aller Wandlerphasen größer als eine erste voreingestellte Spannung ist, Bestimmen, dass die Spannungssymmetrieregelungsrichtung der Hauptwandlerphase die Busspannung der Hauptwandlerphase senkt und die Spannungssymmetrieregelungsrichtungen der anderen Wandlerphasen die Busspannungen anderer Wandlerphasen erhöhen;
als Reaktion darauf, dass die Differenz zwischen der Busspannung der Hauptwandlerphase und dem Durchschnittswert der Busspannungen aller Wandlerphasen kleiner als eine zweite voreingestellte Spannung ist, Bestimmen, dass die Spannungssymmetrieregelungsrichtung der Hauptwandlerphase die Busspannung der Hauptwandlerphase erhöht und die Spannungssymmetrieregelungsrichtungen der anderen Wandlerphasen die Busspannungen anderer Wandlerphasen senken; und
als Reaktion darauf, dass die Differenz zwischen der Busspannung der Hauptwandlerphase und dem Durchschnittswert der Busspannungen aller Wandlerphasen größer als die zweite voreingestellte Spannung und kleiner als die erste voreingestellte Spannung ist, Bestimmen, keine Spannungssymmetrieregelung an der Busspannung jeder Wandlerphase durchzuführen.

2. Verfahren nach Anspruch 1, vor dem Schritt des Erfassens einer Differenz zwischen einer Busspannung eines DC-Buskondensators der Wandlerphase, die eine größte positive Phasenspannung aus der Vielzahl von Phasenspannungen empfängt, und einer Busspannung eines DC-Buskondensators der Wandlerphase, die zu der gleichen bestimmten Zeit in Absolutwert eine größte negative Phasenspannung aus der Vielzahl von Phasenspannungen empfängt, ferner umfassend:
Abtasten der Vielzahl von Phasenspannungen des Wandlers.

3. Verfahren nach Anspruch 1, wobei das Durchführen von Symmetrieregelung an der Busspannung jeder Wandlerphase gemäß der Spannungssymmetrieregelungsrichtung jeder Wandlerphase und dem Spannungssymmetrieregelungstastverhältnis jeder Wandlerphase (S805) Folgendes umfasst:

Überlagern des Spannungssymmetrieregelungstastverhältnis jeder Wandlerphase, eines Vorwärtstastverhältnisses jeder Wandlerphase und eines Feinabstimmungsteils eines PWM-Tastverhältnisses, das durch eine Stromschleife ausgegeben wird, gemäß der Regelungsrichtung des Antriebstastverhältnisses jeder Wandlerphase; und
Regeln der Busspannung jeder Wandlerphase gemäß einem Tastverhältnis nach Überlagerung jeder Wandlerphase.

4. Verfahren nach Anspruch 3, wobei das Regeln der Busspannung jeder Wandlerphase gemäß einem Tastverhältnis nach Überlagerung jeder Wandlerphase Folgendes umfasst:

> Erwerben einer Modulationswelle jeder Wandlerphase gemäß dem Tastverhältnis nach Überlagerung jeder Wandlerphase;
> Umwandeln der Modulationswelle jeder Wandlerphase in ein PWM-Antriebssignal; und
> Steuern von Ein- und Aus-Zuständen eines Steuerleistungsschalters des Wandlers gemäß dem PWM-Antriebssignal, um die Busspannung jeder Wandlerphase zu regeln.

5. Busspannungssymmetrieregelungsverfahren für einen Leistungswandler, wobei der Leistungswandler ein dreiphasiger Leistungswandler ist und jede Wandlerphase einen DC-Buskondensator aufweist, umfassend:

> Erfassen, in Echtzeit, einer Differenz zwischen einer Busspannung eines DC-Buskondensators der Wandlerphase, die eine größte positive Phasenspannung aus der Vielzahl von Phasenspannungen empfängt, und einer Busspannung eines DC-Buskondensators der Wandlerphase, die gleichzeitig in Absolutwert eine größte negative Phasenspannung aus der Vielzahl von Phasenspannungen empfängt, um eine Ausgabe einer Spannungssymmetrieschleife zu berechnen, und
> Berechnen eines Vorwärtstastverhältnisses jeder Phase basierend auf der Ausgabe der Spannungssymmetrieschleife und eines momentanen Eingangsspannungsabtastwertes (Vin) jeder Wandlerphase (S1101, S1102);
> Bestimmen einer Spannungssymmetrieregelungsrichtung jeder Wandlerphase gemäß einer Differenz zwischen einer Busspannung einer Hauptwandlerphase und einem Durchschnittswert von Busspannungen aller Wandlerphasen, wobei die Hauptwandlerphase eine Wandlerphase mit einem größten Absolutwert aus der Vielzahl von Phasenspannungen ist (S1103, S1104); und
> Durchführen von Symmetrieregelung an der Busspannung jeder Wandlerphase gemäß der Spannungssymmetrieregelungsrichtung jeder Wandlerphase und dem Vorwärtstastverhältnis jeder Wandlerphase (S1105, S1106),
> wobei das Bestimmen der Spannungssymmetrieregelungsrichtung jeder Wandlerphase gemäß einer Differenz zwischen einer Busspannung einer Hauptwandlerphase und einem Durchschnittswert von Busspannungen aller Wandlerphasen (S1104) Folgendes umfasst:

>> als Reaktion darauf, dass die Differenz zwischen der Busspannung der Hauptwandlerphase und dem Durchschnittswert der Busspannungen aller Wandlerphasen größer als eine erste voreingestellte Spannung ist, Bestimmen, dass die Spannungssymmetrieregelungsrichtung der Hauptwandlerphase die Busspannung der Hauptwandlerphase senkt und die Spannungssymmetrieregelungsrichtungen der anderen Wandlerphasen die Busspannungen anderer Wandlerphasen erhöhen;
als Reaktion darauf, dass die Differenz zwischen der Busspannung der Hauptwandlerphase und dem Durchschnittswert der Busspannungen aller Wandlerphasen kleiner als eine zweite voreingestellte Spannung ist, Bestimmen, dass die Spannungssymmetrieregelungsrichtung der Hauptwandlerphase die Busspannung der Hauptwandlerphase erhöht und die Spannungssymmetrieregelungsrichtungen der anderen Wandlerphasen die Busspannungen anderer Wandlerphasen senken; und
als Reaktion darauf, dass die Differenz zwischen der Busspannung der Hauptwandlerphase und dem Durchschnittswert der Busspannungen aller Wandlerphasen größer als die zweite voreingestellte Spannung und kleiner als die erste voreingestellte Spannung ist, Bestimmen, keine Spannungssymmetrieregelung an der Busspannung jeder Wandlerphase durchzuführen.

6. Verfahren nach Anspruch 5, wobei das Durchführen von Symmetrieregelung an der Busspannung jeder Wandlerphase gemäß der Regelungsrichtung jeder Wandlerphase und dem Vorwärtstastverhältnis jeder Wandlerphase Folgendes umfasst:

> Überlagern eines Ausgangswertes der Spannungssymmetrieschleife jeder Wandlerphase mit einem momentanen Eingangsspannungsabtastwert jeder Wandlerphase, um das Vorwärtstastverhältnis jeder Wandlerphase zu berechnen;
> Überlagern des Vorwärtstastverhältnisses jeder Wandlerphase und eines Feinabstimmungsteils eines PWM-Tastverhältnisses, das durch eine Stromschleife ausgegeben wird; und
> Regeln der Busspannung jeder Wandlerphase gemäß einem Tastverhältnis nach Überlagerung jeder Wandlerphase.

7. Verfahren nach Anspruch 6, wobei das Regeln der Busspannung jeder Wandlerphase gemäß einem Tastverhältnis nach Überlagerung jeder Wandlerphase Folgendes umfasst:

Erwerben einer Modulationswelle jeder Wandlerphase gemäß dem Tastverhältnis nach Überlagerung jeder Wandlerphase;

Umwandeln der Modulationswelle jeder Wandlerphase in ein PWM-Antriebssignal; und

Steuern von Ein- und Aus-Zuständen eines Steuerleistungsschalters des Wandlers gemäß dem PWM-Antriebssignal, um die Busspannung jeder Wandlerphase zu regeln.

8. Leistungswandler (12), wobei der Leistungswandler ein dreiphasiger Leistungswandler ist und jede Wandlerphase einen DC-Buskondensator aufweist, umfassend:

eine Steuereinheit (121), umfassend:

eine Spannungssymmetrieschleife (1211), die dazu konfiguriert ist, in Echtzeit eine Differenz zwischen einer Busspannung eines DC-Buskondensators der Wandlerphase, die eine größte positive Phasenspannung aus der Vielzahl von Phasenspannungen empfängt, und einer Busspannung eines DC-Buskondensators der Wandlerphase, die gleichzeitig in Absolutwert eine größte negative Phasenspannung aus der Vielzahl von Phasenspannungen empfängt, zu erfassen, um ein Spannungssymmetrieregelungsverhältnis jeder Wandlerphase zu berechnen, und Bestimmen einer Spannungssymmetrieregelungsrichtung jeder Wandlerphase gemäß einer Differenz zwischen einer Busspannung einer Hauptwandlerphase und einem Durchschnittswert von Busspannungen aller Wandlerphasen, wobei die Hauptwandlerphase eine Wandlerphase mit einem größten Absolutwert aus der Vielzahl von Phasenspannungen ist; und

eine Vielzahl von Leistungswandlungseinheiten (122), die dazu konfiguriert ist, Symmetrieregelung an der Busspannung jeder Wandlerphase des Leistungswandlers (12) gemäß der Spannungssymmetrieregelungsrichtung jeder Wandlerphase und dem Spannungssymmetrieregelungstastverhältnis jeder Wandlerphase durchzuführen,

wobei die Spannungssymmetrieschleife (1211) dazu konfiguriert ist, die Spannungssymmetrieregelungsrichtung jeder Wandlerphase durch Folgendes zu bestimmen:

als Reaktion darauf, dass die Differenz zwischen der Busspannung der Hauptwandlerphase und dem Durchschnittswert der Busspannungen aller Wandlerphasen größer als eine erste voreingestellte Spannung ist, Bestimmen, dass die Spannungssymmetrieregelungsrichtung der Hauptwandlerphase die Busspannung der Hauptwandlerphase senkt und die Spannungssymmetrieregelungsrichtungen der anderen Wandlerphasen die Busspannungen anderer Wandlerphasen erhöhen;

als Reaktion darauf, dass die Differenz zwischen der Busspannung der Hauptwandlerphase und dem Durchschnittswert der Busspannungen aller Wandlerphasen kleiner als eine zweite voreingestellte Spannung ist, Bestimmen, dass die Spannungssymmetrieregelungsrichtung der Hauptwandlerphase die Busspannung der Hauptwandlerphase erhöht und Bestimmen, dass die Spannungssymmetrieregelungsrichtungen der anderen Wandlerphasen die Busspannungen anderer Wandlerphasen senken; und

als Reaktion darauf, dass die Differenz zwischen der Busspannung der Hauptwandlerphase und dem Durchschnittswert der Busspannungen aller Wandlerphasen größer als die zweite voreingestellte Spannung und kleiner als die erste voreingestellte Spannung ist, Bestimmen, keine Spannungssymmetrieregelung an der Busspannung jeder Wandlerphase durchzuführen.

9. Leistungswandler (12) nach Anspruch 8, wobei die Steuereinheit (121) ferner Folgendes umfasst:
eine Abtastuntereinheit, die dazu konfiguriert ist, die Vielzahl von Phasenspannungen des Wandlers abzutasten.

10. Leistungswandler (12) nach Anspruch 8, wobei die Steuereinheit (121) ferner Folgendes umfasst:

eine Analog-Digital-Wandlungsuntereinheit, die dazu konfiguriert ist, abgetastete Phasenspannungen der Vielzahl von Phasenspannungen von analogen Signalen in digitale Signale umzuwandeln;

eine Vorwärtsuntereinheit, die dazu konfiguriert ist, ein Vorwärtstastverhältnis jeder Wandlerphase gemäß einer Zielspannung und einer Eingangsphasenspannung jeder Wandlerphase zu berechnen;

eine Spannungsschleife, die dazu konfiguriert ist, eine Differenz zwischen dem Durchschnittswert der Busspannungen aller Wandlerphasen und der Zielbusspannung als Fehlereingabe zur Berechnung zu erfassen, um einen Sollwert einer Stromschleife auszugeben;

wobei die Stromschleife dazu konfiguriert ist, eine Differenz zwischen dem Sollwert der Stromschleife und jedem Wandlerphasenstrom als Eingabe der Stromschleife zu erfassen und einen Feinabstimmungsteil eines PWM-Verhältnisses auszugeben; und

eine PWM-Antriebsuntereinheit, die dazu konfiguriert ist, das Spannungssymmetrieregelungstastverhältnis jeder Wandlerphase, das Vorwärtstastverhältnis jeder Wandlerphase und den Feinabstimmungsteil des PWM-Tastverhältnisses gemäß der Spannungssymmetrieregelungsrichtung jeder Wandlerphase zu überlagern, eine Modulationswelle jeder Wandlerphase gemäß einem Tastverhältnis nach Überlagerung jeder Wandlerphase zu erwerben, die Modulationswelle jeder Wandlerphase in ein PWM-Antriebssignal umzuwandeln und das PWM-Antriebssignal an die Leistungswandlungseinheiten (122) auszugeben.

11. Leistungswandler (12) nach Anspruch 10, wobei die Leistungswandlungseinheiten (122) ferner zu Folgendem konfiguriert sind:
Steuern von Ein- und Aus-Zuständen eines Steuerleistungsschalters des Wandlers gemäß dem PWM-Antriebssignal, um die Busspannung jeder Wandlerphase zu regeln.

12. Leistungswandler (12), wobei der Leistungswandler ein dreiphasiger Leistungswandler ist und jede Wandlerphase einen DC-Buskondensator aufweist, umfassend:
eine Steuereinheit (121), umfassend:

eine Spannungssymmetrieschleife (1211), die dazu konfiguriert ist, in Echtzeit eine Differenz zwischen einer Busspannung eines DC-Buskondensators der Wandlerphase, die eine größte positive Phasenspannung aus der Vielzahl von Phasenspannungen empfängt, und einer Busspannung eines DC-Buskondensators der Wandlerphase, die gleichzeitig in Absolutwert eine größte negative Phasenspannung aus der Vielzahl von Phasenspannungen empfängt, zu erfassen und eine Spannungssymmetrieregelungsrichtung jeder Wandlerphase gemäß einer Differenz zwischen einer Busspannung einer Hauptwandlerphase und einem Durchschnittswert von Busspannungen aller Wandlerphasen zu bestimmen, wobei die Hauptwandlerphase eine Wandlerphase mit einem größten Absolutwert aus der Vielzahl von Phasenspannungen ist;
eine Vorwärtsuntereinheit, die dazu konfiguriert ist, ein Vorwärtstastverhältnis jeder Phase basierend auf der Differenz und einem momentanen Eingangsspannungsabtastwert (Vin) jeder Wandlerphase zu berechnen; und
eine Vielzahl von Leistungswandlungseinheiten (122), die dazu konfiguriert ist, Symmetrieregelung an der Busspannung jeder Wandlerphase des Leistungswandlers (12) gemäß der Regelungsrichtung jeder Wandlerphase und dem Vorwärtstastverhältnis jeder Wandlerphase durchzuführen,
wobei die Spannungssymmetrieschleife (1211) dazu konfiguriert ist, die Regelungsrichtung jeder Wandlerphase durch Folgendes zu bestimmen:

als Reaktion darauf, dass die Differenz zwischen der Busspannung der Hauptwandlerphase und dem Durchschnittswert der Busspannungen aller Wandlerphasen größer als eine erste voreingestellte Spannung ist, Bestimmen, dass die Spannungssymmetrieregelungsrichtung der Hauptwandlerphase die Busspannung der Hauptwandlerphase senkt und die Spannungssymmetrieregelungsrichtungen der anderen Wandlerphasen die Busspannungen anderer Wandlerphasen erhöhen;
als Reaktion darauf, dass die Differenz zwischen der Busspannung der Hauptwandlerphase und dem Durchschnittswert der Busspannungen aller Wandlerphasen kleiner als eine zweite voreingestellte Spannung ist, Bestimmen, dass die Spannungssymmetrieregelungsrichtung der Hauptwandlerphase die Busspannung der Hauptwandlerphase erhöht und Bestimmen, dass die Spannungssymmetrieregelungsrichtungen der Antriebstastverhältnisse anderer Wandlerphasen die Busspannungen anderer Wandlerphasen senken; und
als Reaktion darauf, dass die Differenz zwischen der Busspannung der Hauptwandlerphase und dem Durchschnittswert der Busspannungen aller Wandlerphasen größer als die zweite voreingestellte Spannung und kleiner als die erste voreingestellte Spannung ist, Bestimmen, keine Spannungssymmetrieregelung an der Busspannung jeder Wandlerphase durchzuführen.

13. Leistungswandler (12) nach Anspruch 12, wobei die Steuereinheit (121) ferner Folgendes umfasst:

eine Analog-Digital-Wandlungsuntereinheit, die dazu konfiguriert ist, abgetastete Phasenspannungen der Vielzahl von Phasenspannungen von analogen Signalen in digitale Signale umzuwandeln;
eine Spannungsschleife, die dazu konfiguriert ist, eine Differenz zwischen dem Durchschnittswert der Busspannungen aller Wandlerphasen und der Zielbusspannung als Fehlereingabe zur Berechnung zu erfassen, um einen Sollwert einer Stromschleife auszugeben;
wobei die Stromschleife dazu konfiguriert ist, eine Differenz zwischen dem Sollwert der Stromschleife und jedem Wandlerphasenstrom als Eingabe der Stromschleife zu erfassen und einen Feinabstimmungsteil eines PWM-Verhältnisses auszugeben;

die Vorwärtsuntereinheit dazu konfiguriert ist, einen Ausgangswert der Spannungssymmetrieschleife (1211) jeder Wandlerphase mit einem momentanen Eingangsspannungsabtastwert jeder Wandlerphase zu überlagern, um ein Vorwärtstastverhältnis jeder Wandlerphase zu berechnen; und

eine PWM-Antriebsuntereinheit, die dazu konfiguriert ist, das Vorwärtstastverhältnis jeder Wandlerphase und den Feinabstimmungsteil des PWM-Tastverhältnisses gemäß der Spannungssymmetrieregelungsrichtung jeder Wandlerphase zu überlagern, eine Modulationswelle jeder Wandlerphase gemäß einem Tastverhältnis nach Überlagerung jeder Wandlerphase zu erwerben, die Modulationswelle jeder Wandlerphase in ein PWM-Antriebssignal umzuwandeln und das PWM-Antriebssignal an die Leistungswandlungseinheiten (122) auszugeben.

**Revendications**

1. Procédé de régulation d'équilibre de tension de bus pour un convertisseur de puissance, dans lequel le convertisseur de puissance est un convertisseur de puissance triphasé et chaque phase de convertisseur comporte un condensateur de bus CC, comprenant :

la prise, en temps réel,

d'une différence entre une tension de bus d'un condensateur de bus CC de la phase de convertisseur recevant la tension de phase positive la plus élevée parmi la pluralité de tensions de phase et une tension de bus d'un condensateur de bus CC de la phase de convertisseur recevant en même temps, en valeur absolue, la tension de phase négative la plus élevée parmi la pluralité de tensions de phase (S802), et le calcul d'un rapport cyclique de régulation d'équilibre de tension de chaque phase de convertisseur à l'aide de ladite différence (S803) ;

la détermination d'une direction de régulation d'équilibre de tension de chaque phase de convertisseur en fonction d'une différence entre une tension de bus d'une phase principale de convertisseur et une valeur moyenne de tensions de bus de toutes les phases de convertisseur, ladite phase principale de convertisseur étant une phase de convertisseur présentant la valeur absolue la plus élevée parmi la pluralité de tensions de phase (S801, S804) ; et

la réalisation d'une régulation d'équilibre sur la tension de bus de chaque phase de convertisseur en fonction de la direction de régulation d'équilibre de tension de chaque phase de convertisseur et du rapport cyclique de régulation d'équilibre de tension de chaque phase de convertisseur (S805) ;

dans lequel la détermination de la direction de régulation d'équilibre de tension de chaque phase de convertisseur en fonction d'une différence entre une tension de bus d'une phase principale de convertisseur et une valeur moyenne de tensions de bus de toutes les phases de convertisseur (S804) comprend :

en réponse au fait que la différence entre la tension de bus de la phase principale de convertisseur et la valeur moyenne des tensions de bus de toutes les phases de convertisseur soit supérieure à une première tension prédéfinie, la détermination de la direction de régulation d'équilibre de tension de la phase principale de convertisseur de manière à diminuer la tension de bus de la phase principale de convertisseur et des directions de régulation d'équilibre de tension des autres phases de convertisseur de manière à augmenter les tensions de bus d'autres phases de convertisseur ;

en réponse au fait que la différence entre la tension de bus de la phase principale de convertisseur et la valeur moyenne des tensions de bus de toutes les phases de convertisseur soit inférieure à une seconde tension prédéfinie, la détermination de la direction de régulation d'équilibre de tension de la phase principale de convertisseur de manière à augmenter la tension de bus de la phase principale de convertisseur et des directions de régulation d'équilibre de tension des autres phases de convertisseur de manière à diminuer les tensions de bus d'autres phases de convertisseur ; et

en réponse au fait que la différence entre la tension de bus de la phase principale de convertisseur et la valeur moyenne des tensions de bus de toutes les phases de convertisseur soit supérieure à la seconde tension prédéfinie et inférieure à la première tension prédéfinie, la détermination de ne pas réaliser de régulation d'équilibre de tension sur la tension de bus de chaque phase de convertisseur.

2. Procédé de la revendication 1, avant l'étape de prise d'une différence entre une tension de bus d'un condensateur de bus CC de la phase de convertisseur recevant la tension de phase positive la plus élevée parmi la pluralité de tensions de phase et une tension de bus d'un condensateur de bus CC de la phase de convertisseur recevant, en même temps, en valeur absolue, la tension de phase négative la plus élevée parmi la pluralité de tensions de phase, comprenant en outre :
l'échantillonnage de la pluralité de tensions de phase du convertisseur.

**3.** Procédé de la revendication 1, dans lequel la réalisation d'une régulation d'équilibre sur la tension de bus de chaque phase de convertisseur en fonction de la direction de régulation d'équilibre de tension de chaque phase de convertisseur et du rapport cyclique de régulation d'équilibre de tension de chaque phase de convertisseur (S805) comprend :

la superposition du rapport cyclique de régulation d'équilibre de tension de chaque phase de convertisseur, d'un rapport cyclique d'anticipation de chaque phase de convertisseur et d'une partie de réglage fin d'un rapport cyclique PWM délivré en sortie par une boucle de courant, en fonction de la direction de régulation du rapport cyclique d'entraînement de chaque phase de convertisseur ; et
la régulation de la tension de bus de chaque phase de convertisseur en fonction d'un rapport cyclique après la superposition de chaque phase de convertisseur.

**4.** Procédé de la revendication 3, dans lequel la régulation de la tension de bus de chaque phase de convertisseur en fonction d'un rapport cyclique après la superposition de chaque phase de convertisseur comprend :

l'acquisition d'une onde de modulation de chaque phase de convertisseur en fonction du rapport cyclique après la superposition de chaque phase de convertisseur ;
la conversion de l'onde de modulation de chaque phase de convertisseur en un signal d'entraînement PWM ; et
la commande des états marche et arrêt d'un commutateur de puissance de commande du convertisseur en fonction du signal d'entraînement PWM pour réguler la tension de bus de chaque phase de convertisseur.

**5.** Procédé de régulation d'équilibre de tension de bus pour un convertisseur de puissance, dans lequel le convertisseur de puissance est un convertisseur de puissance triphasé et chaque phase de convertisseur comporte un condensateur de bus CC, comprenant :

la prise, en temps réel,

d'une différence entre une tension de bus d'un condensateur de bus CC de la phase de convertisseur recevant la tension de phase positive la plus élevée parmi la pluralité de tensions de phase et une tension de bus d'un condensateur de bus CC de la phase de convertisseur recevant en même temps, en valeur absolue, la tension de phase négative la plus élevée parmi la pluralité de tensions de phase, pour calculer une sortie d'une boucle d'équilibrage de tension, et
le calcul d'un rapport cyclique d'anticipation de chaque phase sur la base de la sortie de la boucle d'équilibrage de tension et d'une valeur d'échantillonnage de tension d'entrée instantanée (Vin) de chaque phase de convertisseur (S1101, S1102) ;
la détermination d'une direction de régulation d'équilibre de tension de chaque phase de convertisseur en fonction d'une différence entre une tension de bus d'une phase principale de convertisseur et une valeur moyenne de tensions de bus de toutes les phases de convertisseur, ladite phase principale de convertisseur est une phase de convertisseur présentant la valeur absolue la plus élevée parmi la pluralité de tensions de phase (S1103, S1104) ; et
la réalisation d'une régulation d'équilibre sur la tension de bus de chaque phase de convertisseur en fonction de la direction de régulation d'équilibre de tension de chaque phase de convertisseur et du rapport cyclique d'anticipation de chaque phase de convertisseur (S1105, S1106),
dans lequel la détermination de la direction de régulation d'équilibre de tension de chaque phase de convertisseur en fonction d'une différence entre une tension de bus d'une phase principale de convertisseur et une valeur moyenne de tensions de bus de toutes les phases de convertisseur (S1104) comprend :
en réponse au fait que la différence entre la tension de bus de la phase principale de convertisseur et la valeur moyenne des tensions de bus de toutes les phases de convertisseur soit supérieure à une première tension prédéfinie, la détermination de la direction de régulation d'équilibre de tension de la phase principale de convertisseur de manière à diminuer la tension de bus de la phase principale de convertisseur et des directions de régulation d'équilibre de tension des autres phases de convertisseur de manière à augmenter les tensions de bus d'autres phases de convertisseur :

en réponse au fait que la différence entre la tension de bus de la phase principale de convertisseur et la valeur moyenne des tensions de bus de toutes les phases de convertisseur soit inférieure à une seconde tension prédéfinie, la détermination de la direction de régulation d'équilibre de tension de la phase principale de convertisseur de manière à augmenter la tension de bus de la phase principale de convertisseur et des directions de régulation d'équilibre de tension des autres phases de convertisseur de manière à diminuer les tensions de bus d'autres phases de convertisseur ; et
en réponse au fait que la différence entre la tension de bus de la phase principale de convertisseur et la valeur moyenne des tensions de bus de toutes les phases de convertisseur soit supérieure à la seconde tension prédéfinie et inférieure à la première tension prédéfinie, la détermination de ne pas réaliser de régulation d'équilibre de tension sur la tension de bus de chaque phase de convertisseur.

6. Procédé de la revendication 5, dans lequel la réalisation d'une régulation d'équilibre sur la tension de bus de chaque phase de convertisseur en fonction de la direction de régulation de chaque phase de convertisseur et du rapport cyclique d'anticipation de chaque phase de convertisseur comprend :

   la superposition d'une valeur de sortie de la boucle d'équilibrage de tension de chaque phase de convertisseur à une valeur d'échantillonnage de tension d'entrée instantanée de chaque phase de convertisseur pour calculer le rapport cyclique d'anticipation de chaque phase de convertisseur ;
   la superposition du rapport cyclique d'anticipation de chaque phase de convertisseur et d'une partie de réglage fin d'un rapport cyclique PWM délivré en sortie par une boucle de courant ; et
   la régulation de la tension de bus de chaque phase de convertisseur en fonction d'un rapport cyclique après la superposition de chaque phase de convertisseur.

7. Procédé de la revendication 6, dans lequel la régulation de la tension de bus de chaque phase de convertisseur en fonction d'un rapport cyclique après la superposition de chaque phase de convertisseur comprend :

   l'acquisition d'une onde de modulation de chaque phase de convertisseur en fonction du rapport cyclique après la superposition de chaque phase de convertisseur ;
   la conversion de l'onde de modulation de chaque phase de convertisseur en un signal d'entraînement PWM ; et

la commande des états marche et arrêt d'un commutateur de puissance de commande du convertisseur en fonction du signal d'entraînement PWM pour réguler la tension de bus de chaque phase de convertisseur.

8. Convertisseur de puissance (12), ledit convertisseur de puissance étant un convertisseur de puissance triphasé et chaque phase de convertisseur comportant un condensateur de bus CC, comprenant :
une unité de commande (121) comprenant :

   une boucle d'équilibrage de tension (1211) configurée pour prendre, en temps réel, une différence entre une tension de bus d'un condensateur de bus CC de la phase de convertisseur recevant la tension de phase positive la plus élevée parmi la pluralité de tensions de phase et une tension de bus d'un condensateur de bus CC de la phase de convertisseur recevant en même temps, en valeur absolue, la tension de phase négative la plus élevée parmi la pluralité de tensions de phase pour calculer un rapport cyclique de régulation d'équilibre de tension de chaque phase de convertisseur, et déterminer une direction de régulation d'équilibre de tension de chaque phase de convertisseur en fonction d'une différence entre une tension de bus d'une phase principale de convertisseur et une valeur moyenne de tensions de bus de toutes les phases de convertisseur, la phase principale de convertisseur étant une phase de convertisseur présentant la valeur absolue la plus élevée parmi la pluralité de tensions de phase ;
   et ;
   une pluralité d'unités de conversion de puissance (122) configurées pour réaliser une régulation d'équilibre sur la tension de bus de chaque phase de convertisseur du convertisseur de puissance (12) en fonction de la direction de régulation d'équilibre de tension de chaque phase de convertisseur et du rapport cyclique de régulation d'équilibre de tension de chaque phase de convertisseur,
   dans lequel la boucle d'équilibrage de tension (1211) est configurée pour déterminer la direction de régulation d'équilibre de tension de chaque phase de convertisseur par :

   en réponse au fait que la différence entre la tension de bus de la phase principale de convertisseur et la valeur moyenne des tensions de bus de toutes les phases de convertisseur soit supérieure à une première tension prédéfinie, la détermination de la direction de régulation d'équilibre de tension de la phase principale de convertisseur de manière à diminuer la tension de bus de la phase principale de convertisseur et des directions de régulation d'équilibre de tension des autres phases de convertisseur de manière à augmenter les tensions de bus d'autres phases de convertisseur ; en réponse au fait que la différence entre la tension de bus de la phase principale de convertisseur et la valeur moyenne des tensions de bus de toutes les phases de convertisseur soit inférieure à une seconde tension prédéfinie, la détermination de la direction de régulation d'équilibre de tension de la phase principale de convertisseur de manière à augmenter la tension de bus de la phase principale de convertisseur, et la détermination des directions de régulation d'équilibre de tension des autres phases de convertisseur de manière à diminuer les tensions de bus d'autres phases de convertisseur ; et en réponse au fait que la différence entre la tension de bus de la phase principale de convertisseur et la valeur moyenne des tensions de bus de toutes les phases de convertisseur soit supérieure à la seconde tension prédéfinie et inférieure à la première tension prédéfinie, la détermination de ne pas réaliser de régulation d'équilibre de tension sur la tension de bus de chaque phase de convertisseur.

**9.** Convertisseur de puissance (12) de la revendication 8, dans lequel l'unité de commande (121) comprend en outre :
une sous-unité d'échantillonnage configurée pour échantillonner la pluralité de tensions de phase du convertisseur.

**10.** Convertisseur de puissance (12) de la revendication 8, dans lequel l'unité de commande (121) comprend en outre :

une sous-unité de conversion analogique-numérique configurée pour convertir des tensions de phase échantillonnées de la pluralité de tensions de phase de signaux analogiques en signaux numériques ;
une sous-unité d'anticipation configurée pour calculer un rapport cyclique d'anticipation de chaque phase de convertisseur en fonction d'une tension cible et d'une tension de phase d'entrée de chaque phase de convertisseur ;
une boucle de tension configurée pour prendre une différence entre la valeur moyenne des tensions de bus de toutes les phases de convertisseur et la tension de bus cible en tant qu'entrée d'erreur pour le calcul afin de délivrer en sortie une consigne d'une boucle de courant ;
la boucle de courant configurée pour prendre une différence entre la consigne de la boucle de courant et chaque courant de phase de convertisseur en tant qu'entrée de la boucle de courant et délivrer en sortie une partie de réglage fin d'un rapport cyclique PWM ; et
une sous-unité d'entraînement PWM configurée pour superposer le rapport cyclique de régulation d'équilibre de tension de chaque phase de convertisseur, le rapport cyclique d'anticipation de chaque phase de convertisseur et la partie de réglage fin du rapport cyclique PWM en fonction de la direction de régulation d'équilibre de tension de chaque phase de convertisseur, acquérir une onde de modulation de chaque phase de convertisseur en fonction d'un rapport cyclique après la superposition de chaque phase de convertisseur, convertir l'onde de modulation de chaque phase de convertisseur en un signal d'entraînement PWM, et délivrer en sortie le signal d'entraînement PWM aux unités de conversion de puissance (122).

**11.** Convertisseur de puissance (12) de la revendication 10, dans lequel les unités de conversion de puissance (122) sont en outre configurées pour :
commander des états marche et arrêt d'un commutateur de puissance de commande du convertisseur en fonction du signal d'entraînement PWM pour réguler la tension de bus de chaque phase de convertisseur.

**12.** Convertisseur de puissance (12), ledit convertisseur de puissance étant un convertisseur de puissance triphasé et chaque phase de convertisseur comportant un condensateur de bus CC, comprenant :
une unité de commande (121) comprenant :

une boucle d'équilibrage de tension (1211) configurée pour prendre, en temps réel,
une différence entre une tension de bus d'un condensateur de bus CC de la phase de convertisseur recevant la tension de phase positive la plus élevée parmi la pluralité de tensions de phase et une tension de bus d'un condensateur de bus CC de la phase de convertisseur recevant en même temps, en valeur absolue, la tension de phase négative la plus élevée parmi la pluralité de tensions de phase,
et déterminer une direction de régulation d'équilibre de tension de chaque phase de convertisseur en fonction d'une différence entre une tension de bus d'une phase principale de convertisseur et une valeur moyenne de tensions de bus de toutes les phases de convertisseur, la phase principale de convertisseur étant une phase de convertisseur présentant la valeur absolue la plus élevée parmi la pluralité de tensions de phase ;

une sous-unité d'anticipation configurée pour calculer un rapport cyclique d'anticipation de chaque phase sur la base de ladite différence et d'une valeur d'échantillonnage de tension d'entrée instantanée (Vin) de chaque phase de convertisseur ;

et ;

une pluralité d'unités de conversion de puissance (122) configurées pour réaliser une régulation d'équilibre sur la tension de bus de chaque phase de convertisseur du convertisseur de puissance (12) en fonction de la direction de régulation de chaque phase de convertisseur et du rapport cyclique d'anticipation de chaque phase de convertisseur,

dans lequel la boucle d'équilibrage de tension (1211) est configurée pour déterminer la direction de régulation de chaque phase de convertisseur par :

en réponse au fait que la différence entre la tension de bus de la phase principale de convertisseur et la valeur moyenne des tensions de bus de toutes les phases de convertisseur soit supérieure à une première tension prédéfinie, la détermination de la direction de régulation d'équilibre de tension de la phase principale de convertisseur de manière à diminuer la tension de bus de la phase principale de convertisseur et des directions de régulation d'équilibre de tension des autres phases de convertisseur de manière à augmenter les tensions de bus d'autres phases de convertisseur :

en réponse au fait que la différence entre la tension de bus de la phase principale de convertisseur et la valeur moyenne des tensions de bus de toutes les phases de convertisseur soit inférieure à une seconde tension prédéfinie, la détermination de la direction de régulation d'équilibre de tension de la phase principale de convertisseur de manière à augmenter la tension de bus de la phase principale de convertisseur, et la détermination des directions de régulation d'équilibre de tension des rapports cycliques d'entraînement d'autres phases de convertisseur de manière à diminuer les tensions de bus d'autres phases de convertisseur ; et

en réponse au fait que la différence entre la tension de bus de la phase principale de convertisseur et la valeur moyenne des tensions de bus de toutes les phases de convertisseur soit supérieure à la seconde tension prédéfinie et inférieure à la première tension prédéfinie, la détermination de ne pas réaliser de régulation d'équilibre de tension sur la tension de bus de chaque phase de convertisseur.

**13.** Convertisseur de puissance (12) de la revendication 12, dans lequel l'unité de commande (121) comprend en outre :

une sous-unité de conversion analogique-numérique configurée pour convertir des tensions de phase échantillonnées de la pluralité de tensions de phase de signaux analogiques en signaux numériques ;

une boucle de tension configurée pour prendre une différence entre la valeur moyenne des tensions de bus de toutes les phases de convertisseur et la tension de bus cible en tant qu'entrée d'erreur pour le calcul afin de délivrer en sortie une consigne d'une boucle de courant ;

la boucle de courant configurée pour prendre une différence entre la consigne de la boucle de courant et chaque courant de phase de convertisseur en tant qu'entrée de la boucle de courant et délivrer en sortie une partie de réglage fin d'un rapport cyclique PWM ;

ladite sous-unité d'anticipation configurée pour superposer une valeur de sortie de la boucle d'équilibrage de tension (1211) de chaque phase de convertisseur à une valeur d'échantillonnage de tension d'entrée instantanée de chaque phase de convertisseur pour calculer un rapport cyclique d'anticipation de chaque phase de convertisseur ; et

une sous-unité d'entraînement PWM configurée pour superposer le rapport cyclique d'anticipation de chaque phase de convertisseur et la partie de réglage fin du rapport cyclique PWM en fonction de la direction de régulation d'équilibre de tension de chaque phase de convertisseur, acquérir une onde de modulation de chaque phase de convertisseur en fonction d'un rapport cyclique après la superposition de chaque phase de convertisseur, convertir l'onde de modulation de chaque phase de convertisseur en un signal d'entraînement PWM, et délivrer en sortie le signal d'entraînement PWM aux unités de conversion de puissance (122).

Take a difference between a bus voltage of a positive maximum phase and a bus voltage of a negative maximum phase among a plurality of phase voltages of the power converter as an error input of a voltage balancing loop to calculate a voltage balance regulation duty ratio of each phase ⟋ S102

Determine a regulation direction of a driving duty ratio of each phase according to a difference between a bus voltage of a main phase and an average value of bus voltages of all phases, where the main phase is a phase with a largest absolute value among the plurality of phase voltages ⟋ S104

Conduct balance regulation on the bus voltage of each phase according to the regulation direction of the driving duty ratio of each phase and the voltage balance regulation duty ratio of each phase ⟋ S106

Fig. 1

Fig. 2

Fig. 3

Fig. 4

Fig. 5

Fig. 6

Fig. 7

Start

Determine a positive maximum phase, a negative maximum phase and a main phase of input voltages of three phases — S801

Calculate a difference between bus voltages of the positive maximum phase and the negative maximum phase, which is used as an error input of a voltage balancing loop — S802

Input the error into the voltage balancing loop for calculation — S803

Determine a regulation direction of a driving duty ratio of each phase according to a difference between a bus voltage of the main phase and an average value of bus voltages of the three phases — S804

Superpose an absolute value D2 of an output of the voltage balancing loop to the driving duty ratio of each phase according to the driving regulation direction of each phase — S805

End

Fig. 8

Power conversion unit group

Power supply unit

Inducta nce unit

Inducta nce unit

Inducta nce unit

Power conversion unit 1

Power conversion unit 2

Power conversion unit 3

BUS₁

BUS₂

BUS₃

Sampling subunit

A/D conversion subunit

Voltage balancing subunit

Voltage loop

Feedforwa rd

Current loop

PWM driving subunit

Control signal

Control unit

Fig. 9

Fig. 10

Start

Determine a positive maximum phase, a negative maximum phase and a main phase of input voltages of three phases ──╱ S1101

Calculate a difference between bus voltages of the positive maximum phase and the negative maximum phase, which is used as an error input of a voltage balancing loop ──╱ S1102

Input the error into the voltage balancing loop for calculation ──╱ S1103

Determine voltage balance regulation directions according to a difference between a bus voltage of the main phase and an average value of bus voltages of the three phases ──╱ S1104

Conduct positive and negative half cycle judgment for the input voltage of the main phase ──╱ S1105

Superpose, according to a product of the voltage balance regulation direction and an input voltage direction of the main phase, the output of the voltage balancing loop to an instantaneous input voltage sampling value Vin of each phase to participate in the calculation of a feedforward duty ratio ──╱ S1106

Add the feedforward duty ratio D0 of each phase and the output D1 of the current loop to obtain a modulation wave of each phase to be compared with a triangular carrier through a PWM driving subunit so as to obtain a driving signal of a power switch of each power conversion unit ──╱ S1107

End

Fig. 11

Control unit
121

Voltage balancing loop
1211

Power conversion unit
122

Power converter 12

Fig. 12

Memory
1301

Processor
1302

Fig. 13

**REFERENCES CITED IN THE DESCRIPTION**

**Patent documents cited in the description**

- CN 109980913 A
- CN 109713917 A